(19) Europäisches Patentamt
European Patent Office
Office européen des brevets

(11) Publication number: **0 361 181 B1**

(12) **EUROPEAN PATENT SPECIFICATION**

(45) Date of publication of patent specification: **22.03.95**

(51) Int. Cl.6: **C08L 83/16**, C08G 77/62, C04B 35/00

(21) Application number: **89116673.8**

(22) Date of filing: **08.09.89**

# (54) Infusibilization of organic silazane polymers and preparation of hollow ceramic fibers.

(30) Priority: **09.09.88 JP 224593/88**
**07.10.88 JP 253438/88**

(43) Date of publication of application:
**04.04.90 Bulletin 90/14**

(45) Publication of the grant of the patent:
**22.03.95 Bulletin 95/12**

(84) Designated Contracting States:
**DE FR GB**

(56) References cited:
**EP-A- 0 195 353** **EP-A- 0 206 449**
**EP-A- 0 323 062** **DE-A- 3 736 914**
**FR-A- 2 190 764** **FR-A- 2 583 744**
**US-A- 4 535 007** **US-A- 4 771 118**

**PATENT ABSTRACTS OF JAPAN, vol. 13, no. 472 (C-647)[3820], 25th October 1989;& JP-A-1 183 522**

**VYSOKOMOL. SOEDIN., vol. 4, no. 7, 1962, pages 1060-1062; K.A. ANDRIANOV et al.: "Catalytic polymerization of hexamethylcyclotrisilazane andoctamethylcyclotetrasilazane"**

(73) Proprietor: **SHIN-ETSU CHEMICAL CO., LTD.**
**6-1, Ohtemachi 2-chome**
**Chiyoda-ku**
**Tokyo (JP)**

(72) Inventor: **Hayashida, Akira**
**No. 2641-23, Kuroi**
**Joetsu-shi**
**Niigata-ken (JP)**
Inventor: **Takamizawa, Minoru**
**No. 7, Sanai-cho**
**Joetsu-shi**
**Niigata-ken (JP)**
Inventor: **Takeda, Yoshihumi**
**No. 1869, Kuroi**
**Joetsu-shi**
**Niigata-ken (JP)**

(74) Representative: **TER MEER - MÜLLER - STEINMEISTER & PARTNER**
**Mauerkircherstrasse 45**
**D-81679 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 361 181 B1

## Description

This invention generally relates to the preparation of ceramics by a precursor method. More particularly, it relates to a method for infusibilizing an organic silazane polymer as a ceramic precursor in order that it can be pyrolyzed while maintaining the desired shape. This invention also relates to the preparation of hollow ceramic fibers.

### BACKGROUND OF THE INVENTION

Ceramics materials are now of great interest because of heat resistance, abrasion resistance, high-temperature strength and other useful properties. However, it is very difficult to machine ceramics because they are hard and brittle. For this reason, ceramic articles are generally prepared by a powder sintering method comprising molding powder ceramic material into a desired shape as by compaction and sintering the molded material. Also useful is a precursor method comprising melting an organic polymer as a ceramic precursor or dissolving the polymer in a solvent and shaping the melt or solution into a desired shape. The shaped polymer is then sintered to convert the material into inorganic. The precursor method has the advantage that there can be prepared ceramic articles of complex shapes which would otherwise be almost impossible to form by the powder sintering method. Articles of special shape such as fibers and sheets can be prepared by the precursor method.

Among materials generally known as ceramics, SiC and $Si_3N_4$ are particularly of great importance because of their high-temperature properties. More particularly, SiC has good heat resistance and high-temperature strength and $Si_3N_4$ is excellent in thermal shock resistance and fracture toughness. The inventors proposed a process for manufacturing organic silazane polymers for use in the manufacture of SiC-$Si_3N_4$ ceramic materials by the precursor method and a process for manufacturing ceramics from the polymers as disclosed in Takamizawa et al., U.S. Patent No. 4,771,118, U.S. Serial No. 114,111 or West German Offenlegungsschrift DE 3736914 A1, and Japanese Patent Application No. 313264/1987.

In general, ceramic materials are prepared from ceramic precursors by melting, molding, and then infusibilizing the ceramic precursors. The infusibilized precursors are then pyrolyzed into ceramic materials. The infusibilizing step involved in this procedure is usually carried out by several well-known methods. There were proposed various methods including (1) air oxidation, (2) exposure to steam or steam and oxygen, (3) ultraviolet exposure, (4) electron beam exposure, and (5) use of various organic silicon compounds.

These methods have the following problems. Methods (1) and (2) which require only heating in air are widely used because of ease of treatment. However, these methods not only need a great amount of thermal energy, but also yield ceramic materials having a high content of oxygen at the sacrifice of high strength, high modulus, and other characteristics inherent to ceramics.

Unlike methods (1) and (2), methods (3) and (4) have advantages that the energy cost is reduced and they avoid contamination with oxygen. However, these methods require an increased dose of ultraviolet or electron radiation for practically sufficient infusibilization, and equipment for such exposure is very expensive. These methods are commercially unacceptable in these respects.

Method (5) is typically by infusibilizing polymers having an $R_3SiNH$- radical with various organic silicon compounds such as silicon tetrachloride and trichlorosilane or metal chlorides such as $BCl_3$ and $SnCl_4$ as disclosed in U.S. Patent No. 4,535,007. The inventors have found that this method is not effective at all to organic silazane polymers free of an $R_3SiNH$- radical. When processed by this method, fibers of organic silazane polymers free of an $R_3SiNH$-radical are fusion bonded together, losing their own shape as will be demonstrated later in Comparative Example. Since this U.S. Patent refers nowhere to the strength of ceramic fibers after pyrolysis which is the most important factor in the ceramic precursor method, it is unknown how the method is effective in infusibilizing.

Therefore, there is a need for eliminating the above-mentioned drawbacks of the prior art ceramic precursor infusibilizing methods.

The ceramic fibers prepared from ceramic precursors by utilizing the precursor method now draw attention as reinforcements for fiber-reinforced composite materials. To take advantage of their light weight, heat resistance and high strength, such ceramic fibers are combined with plastics, metals and ceramics to form composite materials. Particularly, hollow ceramic fibers having an empty space in the interior are more advantageous as reinforcements for composite materials because of lighter weight than other ceramic fibers, and also useful as light weight aggregates for heavy materials such as super hard materials, heat insulators, filtering materials and the like.

In the prior art there are known two methods for preparing such hollow ceramic fibers. A first method is by spinning a resin having inorganic powder evenly dispersed therein into a hollow fiber, and removing the resin from the hollow fiber as disclosed in U.S. Patent Nos. 4,104,445, 4,175,153, and 4,222,977. A second method involves impregnating carbon fibers with a metal salt, drying and sintering the fibers into a ceramic state, followed by oxidation to remove the core carbon fiber as disclosed in Japanese Patent Application Kokai No. 245315/1986. However, the first method cannot form thin fibers because the mixture of resin and inorganic powder dispersed therein is spun into hollow shape. The second method increases cost because carbon fibers are used as the core. These prior art methods are less practical.

FR-A-2 190 764 discloses the infusibilizing of silazane polymers by at least one treatment, such as heat treatment, oxidation, sulphuration or hydrolysis before pyrolysis. Further, it mentions the treatment with a Lewis acid to assure infusibility. The pyrolysis step is performed in such a way that the material (fibers, etc.) is heated in a gas, such as e.g. ammonia gas up to a temperature range of 800 to 2000 °C at a rate of 1 to 20 °C per minute.

## SUMMARY OF THE INVENTION

An object of the present invention is to provide an economical method for infusibilizing an organic silazane polymer as a ceramic precursor in a simple and convenient manner, ensuring preparation of ceramic fibers of quality.

Another object of the present invention is to provide an economical method capable of preparing hollow ceramic fibers of quality from a ceramic precursor in the form of an organic silazane polymer in a simple and convenient manner.

According to the present invention, there is provided a method for infusibilizing an organic silazane polymer, comprising the steps of melting, shaping, and then infusibilizing the organic silazane polymer, wherein the shaped polymer is treated with a gas containing the vapor of at least one compound selected from the group consisting of compounds of formulae (1) through (4) defined below, and then with a water vapor-containing gas or ammonia-containing gas for infusibilizing at a temperature lower by 20 to 100 °C than the melting point of the organic silazane polymer.

The infusibilizing compounds of formulae (1) through (4) are:

silicon compounds of formula (1):

(1) $R_aSiX_{4-a}$

wherein R is a radical selected from the group consisting of hydrogen, lower alkyl having 1 to 3 carbon atoms, alkenyl, and aryl radicals, X is a chlorine, bromine or iodine atom, and letter a has a value of from 0 to 2 (both inclusive), when a is equal to 2, R radicals may be the same or different;

boron compounds of formula (2):

(2) $BX_3$

wherein X is as defined above;

phosphorus compounds of formula (3):

(3) $PX_b$

wherein X is as defined above, and letter b is equal to 3 or 5; and

metal compounds of formula (4):

(4) $MX_c$

wherein M is a metal selected from the group consisting of Al, Ti, V, Fe, Ga, Ge, Zr, Nb, Sn, Sb, Te, Ta, W, and Bi, letter c is a number equal to the valence of the metal, and X is as defined above.

The method for infusibilizing an organic silazane polymer according to the present invention has overcome the aforementioned problems of the prior art methods by melting and shaping an organic silazane polymer, and treating the shaped polymer with a gas containing at least one infusibilizing agent of formulae (1) through (4) in vapor form and then with a water vapor-containing gas or ammonia-containing gas for infusibilizing. The polymers can be efficiently infusibilized in a commercially advantageous manner to ensure that ceramic fibers and sheets are eventually conveniently produced. Ceramic materials predomi-

nantly comprising SiC and $Si_3N_4$ characterized by high strength and high modulus are obtained when organic silazane polymers as will be defined later are used.

According to the present invention, there is also provided a method for preparing a hollow ceramic fiber, comprising the steps of:

(A) melt spinning an organic silazane polymer into a fiber,

(B) treating the surface of the fiber with a gas containing the vapor of at least one compound selected from the group consisting of compounds of formulae (1) through (4) defined below,

(C) subjecting the fiber to hydrolysis with a water vapor-containing gas or ammonolysis with ammonia-containing gas at a temperature lower by 20 to 100 °C than the melting point of the organic silazane compound, thereby forming an infusible layer on the fiber surface, and

(D) subjecting the fiber to pyrolysis to form a hollow ceramic fiber having an empty interior.

The infusibilizing compounds of formulae (1) through (4) used in step (B) are as defined above.

The method can produce hollow ceramic fibers of quality from the ceramic precursor in the form of an organic silazane polymer in a simple, easy and inexpensive manner.

The reason why the present method is effective in preparing hollow ceramic fibers is not well understood although the following series of reactions are contemplated.

In step (B), =N-H radicals on the fiber surface react with the infusibilizing agent according to the following reaction scheme I:

reaction scheme I:

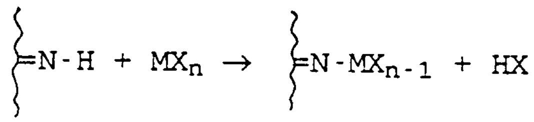

Then in step (C), a gas containing water vapor is passed over the surface of the fiber resulting from step (B) whereby hydrolysis takes place according to the following reaction scheme II such that oxygen linkages span between infusibilizing agents attached to the fiber surface.

Reaction scheme II:

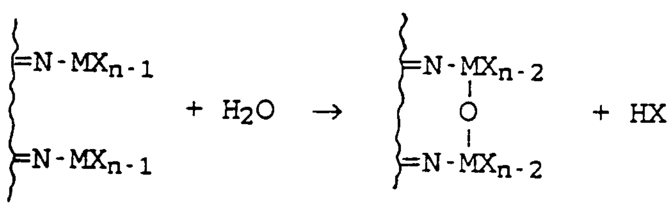

Alternatively, gaseous ammonia or a gas containing ammonia is passed over the surface of the fiber whereby ammonolysis takes place according to the following reaction scheme II′ such that nitrogen linkages span between infusibilizing agents attached to the fiber surface.

Reaction scheme II':

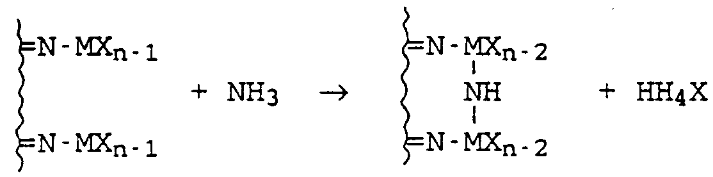

The linkages between the infusibilizing agents through oxygen or nitrogen will spread in a three-dimensional manner to form a layer or film on the fiber surface, completing infusibilization. The fibers having an infusible layer formed through the infusibilizing process are then pyrolyzed into ceramic state whereupon the fibers shrink with a weight loss. The fibers will have a variable form depending on particular infusibilizing conditions. More particularly, if the infusible layer formed by three-dimensional development of oxygen or nitrogen linkages is short, then fibers would be fusion bonded together. If the layer is infusible, but weak, then the resulting fibers would have a flattened or oval cross section due to shrinkage upon pyrolysis. However, since the infusible layer which is formed by a primary infusibilizing step followed by hydrolysis or ammonolysis according to the present invention is resistant to deformation upon subsequent pyrolysis, the subsequent pyrolysis causes shrinkage to occur only in the interior to form an empty space, resulting in hollow fibers.

## BRIEF DESCRIPTION OF THE DRAWINGS

The present invention is illustrated by way of example in the figures of the accompanying drawings, in which:

FIG. 1 is a photomicrograph (X3,500) of a hollow ceramic fiber in cross section of sample No. 8 in Example 1;

FIG. 2 is a diagram showing the X-ray diffraction pattern of hollow ceramic fiber No. 8 in Example 1 sintered at 1200 °C; and

FIG. 3 is a diagram showing the X-ray diffraction pattern of hollow ceramic fiber No. 8 which was further sintered at 1700 °C.

## DETAILED DESCRIPTION OF THE INVENTION

The organic silazane polymer which is the starting material of the present method may be any desired one selected from conventional well-known organic silazane polymers, preferably the organic silazane polymers which are disclosed by the present inventors in the aforementioned U.S. Patent No. 4,771,118, U.S.S.N. 114,111, and Japanese Patent Application No. 313264/1987.

According to the process of U.S. Patent No. 4,771,118, an organic silazane polymer is prepared by reacting ammonia with a mixture of methyldichlorosilane, methyltrichlorosilane and dimethyldichlorosilane to obtain an ammonolysis product, and condensing the ammonolysis product in the presence of a basic catalyst capable of deprotonation. The mixture of methyldichlorosilane, methyltrichlorosilane and dimethyldichlorosilane is preferably composed of from 55 to 80 mol% of methyldichlorosilane, from 10 to 30 mol% of methyltrichlorosilane, and from 5 to 25 mol% of dimethyldichlorosilane.

According to the process of U.S.S.N. 114,111, an organic silazane polymer is prepared from a mixture of (i) at least one compound selected from the group consisting of organic silicon compounds of general formulae (I) and (II):

(I) 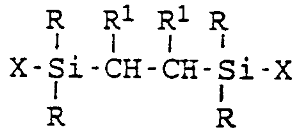 and

(II) 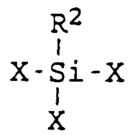

and (ii) an organic silicon compound of general formula (III):

(III) 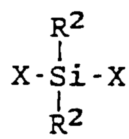 .

In formulae (I), (II), and (III), R is a radical selected from the group consisting of hydrogen, chlorine, bromine, methyl, ethyl, phenyl, and vinyl radicals, $R^1$ is hydrogen or a methyl radical, $R^2$ is a radical selected from the group consisting of hydrogen, methyl, ethyl, phenyl, and vinyl radicals, and X is chlorine or bromine. Like the process of U.S. Patent No. 4,771,118, the organic silicon compound mixture is reacted with ammonia, and the resulting ammonolysis product is deprotonation condensed to form an organic silazane polymer.

The mixture is preferably composed of 0 to 30 mol% of compound (I), 0 to 30 mol% of compound (II), and 40 to 85 mol% of compound (III). More preferably, the mixture is composed of 1 to 25 mol% of compound (I), 1 to 25 mol% of compound (II), and 50 to 80 mol% of compound (III). When a mixture containing compounds (I), (II), and (III) in such a proportion is prepared, compounds (II) and (III) are preferably selected such that $R^2$ in organic silicon compounds (II) and (III) is comprised of 55 to 90 mol% of hydrogen, 0 to 30 mol% of vinyl radical, and 0 to 30 mol% of alkyl or phenyl radical, more preferably 55 to 80 mol% of hydrogen, 0 to 25 mol% of vinyl radical and 0 to 25 mol% of alkyl or phenyl radical.

Examples of compound (I) include 1,2-bis(chlorodimethylsilyl)ethane, 1,2-bis(dichloromethylsilyl)ethane, and 1,2-bis(trichlorosilyl)ethane. Examples of compound (II) include methyltrichlorosilane, trichlorosilane, and vinyltrichlorosilane. Examples of compound (III) include methyldichlorosilane, dimethyldichlorosilane, methylvinyldichlorosilane, and vinyldichlorosilane.

Preferably, a mixture of methyldichlorosilane, methyltrichlorosilane, and an organic silicon compound of formula (I) is used. More preferred is a mixture of 55 to 90 mol% of methyldichlorosilane, 5 to 30 mol% of methyltrichlorosilane, and 2 to 30 mol% of an organic silicon compound of formula (I).

In the above-mentioned processes, it is not critical how to prepare an ammonolysis product from a mixture of methylchlorosilanes. One exemplary convenient procedure is by reacting the mixture with gaseous $NH_3$ in organic solvent, removing the ammonium chloride by-product, and stripping the reaction mixture of the organic solvent. Other procedures will occur to those skilled in the art.

Thereafter, the ammonolysis product is polymerized in the presence of a basic catalyst capable of deprotonation. Preferably, the ammonolysis product is subjected to deprotonation condensation with the catalyst in solvent to complete the reaction. The basic deprotonation catalyst includes alkali and alkaline earth metal hydrides and amides such as KH, NaH, $NaNH_2$, and $KNH_2$. The solvent used may be ethers such as THF and dialkyl ethers, aliphatic hydrocarbons such as pentane and hexane, and aromatic hydrocarbons such as benzene, toluene, and xylene. Although polymerization generally takes place at room temperature, an appropriate polymerization temperature may be selected in the range of 0° to 200°C depending on the type of solvent.

After the completion of deprotonation condensation, the remaining basic catalyst is preferably decomposed with an electrophilic compound such as methyl iodide. The resulting insoluble matter is removed by filtration and the solvent is distilled off in vacuum.

According to the process of Japanese Patent Application No. 313264/1987, an organic silazane polymer is prepared by reacting a mixture of (i) at least one organic silicon compound of general formula (IV):

(IV) 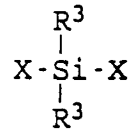

and (ii) at least one organic silicon compound of general formula (V):

(V) 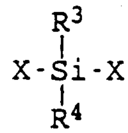

with ammonia to form a silazane compound, and polymerizing the silazane compound in the presence of an alkali catalyst such as KOH and NaOH. In formulae (IV) and (V), $R^3$ is a methyl, ethyl, or phenyl radical, $R^4$ is hydrogen or a vinyl radical, and X is chlorine or bromine.

Any desired compounds of formula (IV) may be used as long as they fall within the above definition, with dimethyldichlorosilane being most preferred.

Among compounds of formula (V), preferred are those wherein $R^4$ is a vinyl radical, that is, vinyl-containing organic silicon compounds of the formula:

(Va) 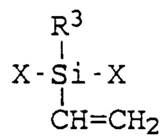 .

Most preferred is methylvinyldichlorosilane.

It is also preferred to use as the compound of formula (V) a mixture of a compound of formula (Va) defined above and a compound wherein $R^4$ is hydrogen, that is, an organic silicon compound of the formula:

(Vb) 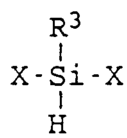

such as methyldichlorosilane.

For the mixture used herein, a compound of formula (IV) and a compound of formula (V) are preferably mixed in a proportion of from 20/80 to 90/10 in mol%, more preferably from 30/70 to 80/20 in mol%. When the compound of formula (V) is a vinyl-containing organic silicon compound of formula (Va) and a hydrogen-containing organic silicon compound of formula (Vb) as defined above, they may preferably be mixed in a proportion of from 5/95 to 95/5 in mol%, more preferably from 20/80 to 80/20 in mol%.

In forming a silazane compound by reacting a mixture of organic silicon compounds as defined above with ammonia, the manner of ammonia reaction is not particularly limited. One exemplary convenient procedure is by reacting the mixture with gaseous $NH_3$ in organic solvent, removing the ammonium chloride by-product, and stripping the reaction mixture of the organic solvent. Other procedures will occur to those skilled in the art. The organic solvent used herein may be pentane, hexane, benzene, toluene, xylene, and diethyl ether, for example. The amount of ammonia used should be at least equal to, preferably 1.2 to 1.5 times the moles of chlorine in the chlorosilanes used.

Thereafter, the resulting silazane compound is polymerized in the presence of an alkali catalyst. The preferred alkali catalysts used herein are KOH and NaOH. The amount of the catalyst added generally ranges from 0.1 to 5% by weight, preferably 0.1 to 2% by weight based on the silazane compound. Polymerization generally takes place without solvent, but may be carried out in solvent. Any desired one of commonly used organic solvents may be employed insofar as it has an appropriate boiling point compared to the polymerization temperature. The polymerization temperature varies with a particular silazane

compound, but may be selected in the range between 0°C and 350°C, preferably between 20°C and 300°C depending on the degree of polymerization desired for the resulting polymer. The post treatment is not particularly limited. One recommendable post treatment involves dissolving the polymer in an organic solvent, removing the insoluble by filtration, and stripping the solution of the solvent under atmospheric pressure or vacuum.

Also useful is the organic silazane polymer which is prepared by heat polymerizing hexamethylcyclotrisilazane having the unit:

$$-(\overset{\displaystyle CH_3}{\underset{\displaystyle CH_3}{\overset{|}{\underset{|}{Si}}}}-NH)_3-$$

in the presence of KOH according to the teaching of Andrianov, S., Vysokomol. Soyed, 4, NOT, 1060-1063 (1962).

These organic silazane polymers are useful ceramic precursors in that they can be pyrolyzed in an inert gas containing nitrogen into ceramic materials composed of $SiC-Si_3N_4$. For example, ceramic fibers may be produced by shaping the organic silazane polymer into filaments by melt spinning and subjecting the polymer filaments to pyrolysis.

This ceramic material forming process is unsuccessful unless shaped polymers are infusibilized before pyrolysis. If shaped polymers such as filaments are pyrolyzed without prior infusibilizing, they cannot maintain their shape during pyrolysis. They melt down during pyrolysis and fuse weld together in the case of filaments. Therefore, an infusibilizing step is essential prior to pyrolysis. The present invention accomplishes infusibilization in two steps. More specifically, shaped articles which are obtained by melting and shaping an organic silazane polymer are infusibilized by a first step of treating with a gas containing the vapor of at least one infusibilizing agent of formulae (1) through (4) as defined above and a second step of treating with a water vapor-containing gas or ammonia-containing gas. The term article is used to encompass articles of any shapes including ordinary three-dimensional articles, fibers, filaments, and sheets.

In the case of preparing hollow ceramic fibers, an infusible layer is formed on the surface of fibers by the two-step infusibilization prior to pyrolysis. More specifically, fibers which are obtained by melt spinning an organic silazane polymer are infusibilized by a first step of treating with a gas containing the vapor of at least one infusibilizing agent of formulae (1) through (4) and a second step of treating with a water vapor-containing gas or ammonia-containing gas, thereby forming a strong infusible layer on the fiber surface. During the two-step infusibilization process, reaction takes place according to the above-mentioned reaction scheme I and II or II' whereby linkages of the infusibilizing agent of formula (1), (2), (3) or (4) via oxygen or nitrogen grow as a three-dimensional network to form an infusible layer on the fiber surface. The infusible layer is fully resistant to deformation when shrinkage occurs during subsequent pyrolysis at elevated temperatures. Pyrolysis takes place in the fibers without substantial deformation of the infusible surface layer, leaving ceramic fibers having an empty space in the interior.

The first infusibilizing step will be described. The infusibilizing compounds of formulae (1) through (4) are shown below.

A first group of infusibilizing agents is silicon compounds of formula (1):

(1) $R_aSiX_{4-a}$

wherein R is a hydrogen atom, a lower alkyl radical (having 1 to 3 carbon atoms), an alkenyl radical (preferably having 2 to 3 carbon atoms), or an aryl radical (preferably having 6 to 9 carbon atoms),

X is a chlorine, bromine or iodine atom, and

letter a has a value of from 0 (inclusive) to 2 (inclusive), when a is equal to 2, R radicals may be the same or different.

A second group of infusibilizing agents is boron compounds of formula (2):

(2) $BX_3$

wherein X is as defined above.

A third group of infusibilizing agents is phosphorus compounds of formula (3):

(3) $PX_b$

wherein X is as defined above, and letter b is equal to 3 or 5.

A fourth group of infusibilizing agents is metal compounds of formula (4):

(4) $MX_c$

wherein M is a metal selected from the group consisting of Al, Ti, V, Fe, Ga, Ge, Zr, Nb, Sn, Sb, Te, Ta, W, and Bi, letter c is a number equal to the valence of the metal, and

X is as defined above.

Some preferred examples of the infusibilizing agents having formulae (1) through (4) include $CH_3SiCl_3$, $(CH_3)_2SiCl_2$, $(C_2H_5)SiCl_3$, $(C_2H_5)_2SiCl_2$, $C_6H_5SiCl_3$, $(C_6H_5)_2SiCl_2$, $CH_2=CHSiCl_3$, $(CH_2=CH)_2SiCl_2$, $HSiCl_3$, $H_2SiCl_2$, $SiCl_4$, $H(CH_3)SiCl_2$, $H(CH_2=CH)SiCl_2$, $(CH_2=CH)C_6H_5SiCl_2$, $BCl_3$, $BBr_3$, $BI_3$, $PCl_3$, $PCl_5$, $PBr_3$, $PI_3$, $AlCl_3$, $TiCl_4$, $FeCl_3$, $VCl_4$, $GaCl_3$, $GeCl_4$, $ZrCl_4$, $NbCl_5$, $SnCl_4$, $SbCl_3$, $TaCl_5$, $TeCl_4$, $WCl_5$, and $BiCl_3$. They may be used alone or in admixture of two or more. Most preferred are $H(CH_3)SiCl_2$, $HSiCl_3$, $BCl_3$, $PCl_3$, $AlCl_3$, and $TiCl_4$.

The articles may be treated with a gas containing the infusibilizing agent in any desired manner. For example, an inert gas such as nitrogen ($N_2$), argon (Ar), and helium (He) may be used as a carrier gas. The carrier gas is passed into the infusibilizing agent and then to a region where the articles are placed whereupon the articles are contacted with the carrier gas having the vapor of the agent carried thereon. The concentration of the infusibilizing agent in the gas may be controlled to a desired level by adjusting the temperature of the infusibilizing agent source so as to give an appropriate vapor pressure. If the concentration of the agent in the gas is too high, the gas may be diluted with an inert gas. In general, the concentration of infusibilizing agent vapor is preferably controlled to 0.0001 to 0.1 mol, more preferably 0.01 to 0.05 mol of the agent per liter of the carrier gas. The treating temperature and time vary with a particular type of organic silazane polymer used. Usually, the treating temperature is a sufficiently low temperature to maintain the polymer infusible, that is, a temperature sufficiently lower than the melting point of the polymer, namely a temperature lower by 20 to 100 °C, preferably by 25 to 80 °C, than the melting point of the polymer. The treating time is a sufficient time to render the articles substantially infusible, preferably 5 to 240 minutes, more preferably 10 to 120 minutes. If the concentration of the infusibilizing agent vapor is low, the treating time is desirably extended because there is a possibility that articles such as fibers will be fusion bonded together. In turn, if the concentration of the infusibilizing agent vapor is high, the treating time is desirably reduced because there is a possibility that a gel will form on the article surface, e.g., fiber surface, reducing the article (e.g., fiber) strength after sintering.

At the end of the first infusibilizing step, the polymer articles become insoluble in commonly used solvents, for example, benzene, hexane, toluene, and tetrahydrofuran. However, the polymer articles resulting from only the first infusibilizing step is not fully infusible and will melt during subsequent pyrolysis as will be later demonstrated in Comparative Example. The second step of treating with a water vapor-containing gas or ammonia-containing gas is essential to enhance the infusibility of polymer articles. The term "water vapor-containing gas" encompasses water vapor and any gases containing a concentration of water vapor. The term "ammonia-containing gas" encompasses pure gaseous ammonia and any gases containing ammonia.

The manner of treatment in the second step is not particularly limited. In the case of treatment with a water vapor-containing gas, for example, the articles resulting from the first infusibilizing step may be simply exposed in air for a predetermined time to render the articles completely infusible. The air exposure is simple, but somewhat difficult to consistently yield ceramic articles having high strength and modulus because the humidity in air is not always constant. Due to varying humidity, subsequent pyrolysis will result in articles having a varying oxygen content or fused fibers. Therefore, the second step is preferably carried out by passing air or an inert gas such as nitrogen and argon into water at a controlled temperature, more preferably bubbling air or inert gas through water at a predetermined rate, thereby forming air or inert gas containing saturated water vapor at the temperature. The resulting gas with saturated water vapor is passed over the articles for a sufficient time to complete infusibilization. The treating temperature and time vary with a particular type of organic silazane polymer used as in the first step. Usually, the treating temperature is a temperature sufficiently lower than the melting point of the polymer, namely a temperature lower by 20 to 100 °C, preferably by 25 to 80 °C, than the melting point of the polymer. The treating time is a sufficient time to complete infusibilization, preferably 5 to 240 minutes, more preferably 10 to 120 minutes. The

temperature of water into which air or inert gas is bubbled at the predetermined rate may preferably vary over the range of 0 to 100 °C, more preferably 0 to 70 °C, most preferably 0 to 30 °C. The moisture loading in the gas or air is preferably set at 0.6 to 100 mol%, more preferably 0.6 to 30 mol%, most preferably 0.6 to 4.2 mol%.

In the case of ammonia gas treatment, infusibilizing may be completed by exposing the articles resulting from the first infusibilizing step to ammonia gas or ammonia gas diluted with an inert gas. In the second step, the ammonia gas concentration preferably ranges from 0.01 to 100% by volume, more preferably from 0.2 to 50% by volume, most preferably from 0.5 to 10% by volume. If the ammonia concentration is too high, the ammonia gas is diluted with a rare gas such as argon and helium or an inert gas such as nitrogen gas. The ammonia gas with or without a diluent gas may be passed over the articles for a sufficient time to complete infusibilization. The treating temperature and time are approximately the same as described for the water vapor treatment.

When it is desired to prepare hollow ceramic fibers, the treating temperature of the second step is a temperature sufficiently lower than the melting point of the polymer, preferably in the range of from 0 °C to a temperature lower by 30 °C than the melting point of the polymer. The treating time of the second step is a sufficient time to complete infusibilization, preferably 30 to 360 minutes. Lower temperatures below 0 °C are less desirable for economy whereas temperatures higher than the melting point of the polymer minus 30 °C would probably cause fusion welding of fibers. Treating times less than 30 minutes are sometimes too short to ensure that fibers be hollow at the end of pyrolysis whereas treating times longer than 360 minutes would often cause the fibers to lose strength.

The polymeric articles thus made infusible are then sintered for pyrolysis in a conventional manner, yielding ceramic articles. For example, any one of the organic silazane polymers the inventors proposed may be shaped into fibers and infusibilized by the above-mentioned two steps. The resulting infusible fibers are sintered at high temperatures under tension or in free state, resulting in ceramic fibers composed mainly of SiC and $Si_3N_4$ and having high strength and modulus. Sintering is preferably carried out in vacuum or in an inert gas such as argon or in an atmosphere of nitrogen ($N_2$), hydrogen ($H_2$) or ammonia ($NH_3$) gas at a temperature of 700 to 2000 °C, more preferably 700 to 1500 °C. Also preferably, the infusible fibers are sintered under tension. Under such preferred conditions, there are produced solid ceramic fibers of quality as typified by a tensile strength of 1,960 to 2,940 $N/mm^2$ (200 to 300 $kg/mm^2$) and a modulus of elasticity of 147 to 245 $kN/mm^2$ (15 to 25 $t/mm^2$) or hollow ceramic fibers of quality as typified by a tensile strength of 980 to 1,960 $N/mm^2$ (100 to 200 $kg/mm^2$) and a modulus of elasticity of 98 to 196 $kN/mm^2$ (10 to 20 $t/mm^2$).

There has been described a simple, commercially advantageous method for producing hollow ceramic fibers utilizing the precursor method without a need for advanced hollow fiber manufacturing technology. The resulting hollow ceramic fibers will find a variety of applications as light weight aggregates for composite materials and the like. Hollow ceramic fibers composed of SiC and $Si_3N_4$ and having high strength and modulus will result from the use of ceramic precursors in the form of the organic silazane polymers that the inventors previously proposed.

## EXAMPLE

Examples of the present invention are given below together with comparative examples by way of illustration and not by way of limitation.

### Example 1

A dry 2-liter four-necked flask equipped with a stirrer, a thermometer, an ammonia admission tube, and a water-cooled condenser was charged with 1500 ml of hexane. To the flask were added 83.38 grams of methyldichlorosilane, 22.59 grams of methyltrichlorosilane, and 16.0 grams of dimethyldichlorosilane. Excess gaseous ammonia was introduced into the solution at room temperature at a flow rate of 90 liter/hour for 1-1/4 hours. The total amount of ammonia added was 5.0 mol. The reaction mixture was allowed to stand at room temperature while the condenser was replaced by an air-cooled condenser for allowing the unreacted ammonia to escape from the flask. The ammonium chloride by-product was removed from the reaction mixture by filtration in a dry box. The cake was then washed three times with 1.5 liters of hexane. The filtrate was stripped of the hexane under a vacuum of 133.3 Pa (1 mmHg) at 60 °C. The residue or ammonolysis product was a clear free-flowing liquid in a yield of 52.0 grams.

Next, a 500-ml three-necked flask equipped with a stirrer, a thermometer, and a dropping funnel was placed in a dry box and charged with 0.4 grams of potassium hydride and 250 ml of tetrahydrofuran (THF)

which had been dehydrated with NaH. The flask was taken out of the dry box and connected to a nitrogen gas tube. While the mixture was stirred at room temperature to disperse potassium hydride, 40 grams of the ammonolysis product in 100 ml of THF was slowly added to the mixture over one hour through the dropping funnel. Large amounts of gases evolved during the addition. After 2 hours, the reaction temperature was raised to the reflux temperature of THF and maintained at the temperature for a further 1-1/2 hours. The gases ceased to evolve after 3-1/2 hours from the start of reaction. The flask was cooled down to room temperature before 4 grams of methyl iodide was added, yielding a white precipitate of KI. The reaction mixture was stirred for a further 30 minutes and then distilled of the majority of THF solvent under vacuum to leave a white slurry, to which 100 ml of hexane was added. The mixture was filtered and the filtrate was stripped of the hexane under a vacuum of 133.3 Pa (1 mmHg) at 180 °C, yielding 36.5 grams of a silazane polymer in the form of a viscous solid. The polymer had a melting point of 143 °C and a molecular weight of 1200 as measured by a benzene molar depression of freezing point method. It was soluble in hexane, benzene, THF and other organic solvents. An IR analysis of the polymer showed absorption peaks at 3400 $cm^{-1}$ for NH, 2980 $cm^{-1}$ for C-H, 2150 $cm^{-1}$ for Si-H, and 1260 $cm^{-1}$ for $Si-CH_3$.

The silazane polymer designated Polymer A was heated at 160 °C and melt spun through a spinneret having an orifice of 0.2 mm in diameter. The resulting green or pre-ceramic filaments had a diameter of 12 to 13 µm.

The filaments in a weight of 0.05 to 0.2 grams were rested in an alumina boat, which was placed in a mullite tube furnace of 50 mm in diameter. After the furnace was purged with an inert gas of $N_2$ or Ar, the furnace was ready for the first infusibilizing step. Nitrogen gas was passed through a bubbling apparatus charged with trichlorosilane, obtaining a nitrogen gas containing trichlorosilane gas in a pre-determined concentration. The concentration of trichlorosilane gas was controlled in terms of temperature. The trichlorosilane-carrying nitrogen gas was passed through the furnace.

The second infusibilizing step was carried out by purging the furnace with an inert gas of $N_2$ or Ar again. The filaments were treated with wet air for varying time, making the filaments infusible. The wet air used herein was prepared by bubbling air into water at room temperature to form wet air having a relative humidity of 100% at room temperature. After the filaments were treated with wet air for a predetermined time, the furnace was purged with nitrogen gas again and heated to a temperature of 1200 °C at a rate of 150 °C/hour in a nitrogen stream. The filaments were pyrolyzed at the temperature for 30 minutes and then cooled down.

Tables 1 and 2 show the conditions for the trichlorosilane treatment, wet air treatment, and sintering as well as the appearance of sintered filaments.

Table 1

| Sample No. | Trichlorosilane treatment (first step) Gas conc. (mol/l) | Treat time (min.) | Sample temp. (°C) | Wet air treatment (second step) Water temp. (°C) | Air bubbling (l/hr.) | Treat time (min.) | Sample temp. (°C) | Appearance of filaments after sintering |
|---|---|---|---|---|---|---|---|---|
| 1 | 0.02 | 15 | r.t. | 25 | 13 | 15 | r.t. | some fusion bonds |
| 2 | 0.02 | 15 | r.t. | 25 | 13 | 30 | r.t. | no fusion bond, good |
| 3 | 0.02 | 15 | r.t. | 25 | 13 | 60 | r.t. | no fusion bond, good |
| 4 | 0.02 | 15 | 50 | 25 | 13 | 15 | r.t. | no fusion bond, good |
| 5 | 0.02 | 15 | 150 | 25 | 13 | 30 | 50 | no fusion bond, good |
| 6 | 0.01 | 15 | r.t. | 25 | 13 | 30 | 50 | no fusion bond, good |
| 7 | 0.005 | 15 | 50 | 25 | 13 | 40 | 50 | no fusion bond, good |

r.t.: room temperature

Table 2

| Sample No. | Trichlorosilane treatment (first step) Gas conc. (mol/1) | Trichlorosilane treatment (first step) Treat time (min.) | Trichlorosilane treatment (first step) Sample temp. (ºC) | Wet air treatment (second step) Water temp. (ºC) | Wet air treatment (second step) Air bubbling (1/hr.) | Wet air treatment (second step) Treat time (min.) | Wet air treatment (second step) Sample temp. (ºC) | Shape of fibers after sintering |
|---|---|---|---|---|---|---|---|---|
| 8 | 0.02 | 15 | 50 | 25 | 13 | 60 | 50 | hollow |
| 9 | 0.02 | 15 | 50 | 25 | 13 | 120 | 50 | hollow |
| 10 | 0.02 | 15 | 50 | 25 | 13 | 240 | 50 | hollow |
| 11 | 0.01 | 15 | 50 | 25 | 13 | 60 | 50 | hollow |
| 12 | 0.005 | 15 | 50 | 25 | 13 | 60 | 50 | hollow |

As is evident from the data of Table 1, the sintered filaments of sample No. 1 lightly fusion bonded together in some areas. Sample Nos. 2 to 7 gave very good sintered filaments free of a fusion bond since they had been made fully infusible prior to sintering.

The sintered filaments of sample No. 5 were measured for physical properties to find a tensile strength of 2,450 N/mm$^2$ (250 kg/mm$^2$) and a tensile modulus of 245 kN/mm$^2$ (25 t/mm$^2$) at a filament diameter of 9.3 $\mu$m. They were found to be ceramic filaments composed mainly of SiC and $Si_3N_4$ and having a composition: Si 56.7%, C 16.8%, N 17.6%, and O 8.9%.

As is evident from the data of Table 2, all the fibers were in hollow shape at the end of sintering. The sintered fibers of sample No. 8 were measured for physical properties. As seen from FIG. 1, a photomicrograph of fiber cross section under a scanning electron microscope with a magnification X3,500, the fibers were of hollow shape having an outer diameter of about 10 µm and an inner diameter of about 6 µm. They had a tensile strength of 1,470 N/mm$^2$ (150 kg/mm$^2$) and a tensile modulus of 117.6 kN/mm$^2$ (12 t/mm$^2$). They were found to be ceramic fibers composed mainly of SiC and $Si_3N_4$ and having a composition: Si 56.7%, C 16.8%, N 11.5%, and O 15.0%. An X-ray diffraction analysis of sample No. 8 is shown in FIG. 2 indicating that the fibers were amorphous. The fibers were further heated at 1,700 °C and analyzed by X-ray diffraction again, with the result shown in FIG. 3 demonstrating that the fibers were of ceramics composed of SiC and $Si_3N_4$.

Example 2

Filaments having a diameter of 12 to 13 µm obtained by melt spinning Polymer A in Example 1 were infusibilized and sintered by the same procedures as in Example 1 except that the infusibilizing agent used in the first infusibilizing step was changed.

Tables 3 and 4 show the conditions for the first and second infusibilizing steps as well as the appearance of sintered filaments.

Table 3

| Sample No. | Type of agent | First step: Gas conc. (mol/l) | First step: Treat time (min.) | First step: Sample temp. (°C) | Second step (Wet air treatment): Water temp. (°C) | Second step (Wet air treatment): Air bubbling (l/hr.) | Second step (Wet air treatment): Treat time (min.) | Second step (Wet air treatment): Sample temp. (°C) | Appearance of filaments after sintering |
|---|---|---|---|---|---|---|---|---|---|
| 13 | $H(CH_3)SiCl_2$ | 0.02 | 15 | r.t. | 25 | 10 | 40 | r.t. | good |
| 14 | $SiCl_4$ | 0.02 | 15 | r.t. | 25 | 10 | 40 | r.t. | good |
| 15 | $BCl_3$ | 0.02 | 15 | r.t. | 25 | 10 | 40 | r.t. | good |
| 16 | $PCl_3$ | 0.02 | 15 | r.t. | 25 | 10 | 40 | r.t. | good |
| 17 | $TiCl_4$ | 0.02 | 15 | r.t. | 25 | 10 | 40 | r.t. | good |
| 18 | $AlCl_3$ | 0.02 | 15 | r.t. | 25 | 10 | 40 | r.t. | slight fusion bonds |
| 19 | $AlCl_3$ | 0.02 | 30 | r.t. | 25 | 10 | 60 | r.t. | good |

r.t.: room temperature

Table 4

| | First step | | | | Second step (Wet air treatment) | | | | |
|---|---|---|---|---|---|---|---|---|---|
| Sample No. | Type of agent | Gas conc. (mol/l) | Treat time (min.) | Sample temp. (°C) | Water temp. (°C) | Air bubbling (l/hr.) | Treat time (min.) | Sample temp. (°C) | Shape of fibers after sintering |
| 20 | $H(CH_3)SiCl_2$ | 0.02 | 30 | 50 | 25 | 10 | 60 | 50 | hollow |
| 21 | $SiCl_4$ | 0.02 | 30 | 50 | 25 | 10 | 60 | 50 | hollow |
| 22 | $BCl_3$ | 0.02 | 30 | 70 | 25 | 10 | 60 | 50 | hollow |
| 23 | $PCl_3$ | 0.02 | 30 | 70 | 25 | 10 | 60 | 50 | hollow |
| 24 | $TiCl_4$ | 0.02 | 30 | 80 | 25 | 10 | 60 | 50 | hollow |
| 25 | $AlCl_3$ | 0.02 | 30 | 80 | 25 | 10 | 120 | 50 | hollow |
| 26 | $AlCl_3$ | 0.02 | 30 | 80 | 25 | 10 | 120 | 50 | hollow |

As is evident from the data of Table 3, better results were obtained when boron, phosphorus, titanium, and aluminum compounds were used as the infusibilizing agent in the first step instead of the silicon compound. In particular, the sintered filaments of sample No. 16 showed outstanding physical properties, a tensile strength of 2,744 $N/mm^2$ (280 $kg/mm^2$) and a tensile modulus of 235.2 $kN/mm^2$ (24 $t/mm^2$) at a filament diameter of 9.5 $\mu m$.

As is evident from the data of Table 4, better results were obtained when boron, phosphorus, titanium, and aluminum compounds were used as the infusibilizing agent in the first step instead of the silicon compound. In particular, the sintered hollow fibers of sample No. 23 which was treated with $PCl_3$ had an outer diameter of 10.5 $\mu m$ and showed outstanding physical properties, a tensile strength of 1,568 $N/mm^2$ (160 $kg/mm^2$) and a tensile modulus of 147 $kN/mm^2$ (15 $t/mm^2$).

Example 3

The starting mixture was a mixture of methyldichlorosilane, 1,2-bis(methyldichlorosilyl)ethane, and methyltrichlorosilane in a proportion of 70:10:20 in mol%. A silazane polymer designated Polymer B was obtained by following the procedure of Example 1, that is, by reacting the chlorosilane mixture with ammonia and subjecting the ammonolysis product to deprotonation condensation in the presence of KH. The polymer had a melting point of 96 °C and a molecular weight of 1050 as measured by a benzene molar depression of freezing point method.

Using spinning equipment as in Example 1, the silazane polymer designated Polymer B was melt spun at 120 °C into pre-ceramic filaments having a diameter of 13 to 14 $\mu m$. The filaments were placed in a mullite tube furnace, infusibilized by the same procedures as in Example 1 except that the infusibilizing agent and treating conditions were changed, and finally sintered as in Example 1.

Tables 5 and 6 show the conditions for the first and second infusibilizing steps as well as the appearance of sintered filaments.

Table 5

| Sample No. | Type of agent (First step) | Gas conc. (mol/l) (First step) | Treat time (min.) (First step) | Sample temp. (°C) (First step) | Water temp. (°C) (Second step, Wet air treatment) | Air bubbling (l/hr.) (Second step, Wet air treatment) | Treat time (min.) (Second step, Wet air treatment) | Sample temp. (°C) (Second step, Wet air treatment) | Appearance of filaments after sintering |
|---|---|---|---|---|---|---|---|---|---|
| 27 | $(CH_2=CH)CH_3SiCl_2$ | 0.05 | 10 | r.t. | 15 | 20 | 10 | r.t. | slight fusion bonds |
| 28 | $(CH_2=CH)CH_3SiCl_2$ | 0.05 | 20 | r.t. | 15 | 20 | 20 | r.t. | good, no fusion bond |
| 29 | $(CH_2=CH)SiCl_3$ | 0.02 | 15 | 30 | 15 | 10 | 30 | r.t. | good |
| 30 | $ZrCl_4$ | 0.02 | 15 | 50 | 15 | 10 | 30 | r.t. | good |
| 31 | $PBr_3$ | 0.02 | 20 | 50 | 15 | 10 | 30 | r.t. | good |
| 32 | $PCl_5$ | 0.02 | 10 | 50 | 15 | 10 | 30 | r.t. | good |

r.t.: room temperature

Table 6

| | First step | | | | Second step (Wet air treatment) | | | | |
|---|---|---|---|---|---|---|---|---|---|
| Sample No. | Type of agent | Gas conc. (mol/l) | Treat time (min.) | Sample temp. (°C) | Water temp. (°C) | Air bubbling (l/hr.) | Treat time (min.) | Sample temp. (°C) | Shape of fibers after sintering |
| 33 | $(CH_2{=}CH)CH_3SiCl_2$ | 0.05 | 30 | 50 | 15 | 20 | 60 | 50 | hollow |
| 34 | $(CH_2{=}CH)CH_3SiCl_2$ | 0.05 | 30 | 50 | 15 | 20 | 120 | 50 | hollow |
| 35 | $(CH_2{=}CH)SiCl_3$ | 0.02 | 30 | 30 | 15 | 10 | 60 | 50 | hollow |
| 36 | $ZrCl_4$ | 0.02 | 30 | 50 | 15 | 10 | 60 | 50 | hollow |
| 37 | $PBr_3$ | 0.02 | 30 | 50 | 15 | 10 | 60 | 50 | hollow |
| 38 | $PCl_5$ | 0.02 | 30 | 50 | 15 | 10 | 60 | 50 | hollow |

As is evident from the data of Table 5, all the samples showed very good results except sample No. 27 in which the sintered filaments were lightly fusion bonded together.

As is evident from the data of Table 6, hollow fibers were obtained in all the runs.

Example 4

A silazane polymer was prepared from a halosilane mixture by the process of Japanese Patent Application No. 313264/1987. The starting mixture was a mixture of dimethyldichlorosilane and methylvinyldichlorosilane in a proportion of 50:50 in mol%. The chlorosilane mixture was reacted with ammonia in hexane solvent. The resulting ammonolysis product, 30 grams, was polymerized at 280 °C in the presence of 0.3 grams of KOH, yielding 23 grams of a silazane polymer designated Polymer C. The polymer had a melting point of 113 °C and a molecular weight of 1511 as measured by a benzene molar depression of freezing point method. An IR analysis showed absorption peaks at 3400 $cm^{-1}$ for NH, 2980 $cm^{-1}$ for C-H, 1420 $cm^{-1}$ for $CH_2=CH$, and 1260 $cm^{-1}$ for $Si\text{-}CH_3$.

Polymer C was melt spun at 130 °C by the same procedure as in Example 1, forming pre-ceramic filaments having a diameter of 10 to 12 μm. The filaments were placed in a mullite tube furnace, infusibilized by the same procedures as in Example 1 except that the infusibilizing agent and treating conditions were changed, and finally pyrolyzed at 1200 °C as in Example 1.

Tables 7 and 8 show the conditions for the first and second infusibilizing steps as well as the appearance of sintered filaments.

Table 7

| Sample No. | Type of agent | First step: Gas conc. (mol/l) | First step: Treat time (min.) | First step: Sample temp. (ºC) | Second step (Wet air treatment): Water temp. (ºC) | Second step (Wet air treatment): Air bubbling (l/hr.) | Second step (Wet air treatment): Treat time (min.) | Second step (Wet air treatment): Sample temp. (ºC) | Appearance of filaments after sintering |
|---|---|---|---|---|---|---|---|---|---|
| 39 | $CH_3SiCl_3$ | 0.02 | 15 | r.t. | 15 | 20 | 40 | r.t. | good, no fusion bond |
| 40 | $(CH_3)_2SiCl_2$ | 0.02 | 30 | 40 | 15 | 20 | 60 | r.t. | good, no fusion bond |
| 41 | $(CH_2=CH)SiCl_3$ | 0.02 | 15 | r.t. | 15 | 20 | 40 | r.t. | good, no fusion bond |
| 42 | $FeCl_3$ | 0.1 | 30 | 50 | 15 | 20 | 60 | 50 | good, no fusion bond |
| 43 | $SnCl_4$ | 0.05 | 30 | 50 | 15 | 20 | 60 | 50 | good, no fusion bond |

r.t.: room temperature

Table 8

| | First step | | | | Second step (Wet air treatment) | | | | |
|---|---|---|---|---|---|---|---|---|---|
| Sample No. | Type of agent | Gas conc. (mol/l) | Treat time (min.) | Sample temp. (°C) | Water temp. (°C) | Air bubbling (l/hr.) | Treat time (min.) | Sample temp. (°C) | Shape of fibers after sintering |
| 44 | $CH_3SiCl_3$ | 0.02 | 30 | 40 | 15 | 20 | 60 | 40 | hollow |
| 45 | $(CH_3)_2SiCl_2$ | 0.02 | 30 | 40 | 15 | 20 | 120 | 40 | hollow |
| 46 | $(CH_2{=}CH)SiCl_3$ | 0.02 | 30 | 40 | 15 | 20 | 60 | 40 | hollow |
| 47 | $FeCl_3$ | 0.1 | 30 | 50 | 15 | 20 | 120 | 50 | hollow |
| 48 | $SnCl_4$ | 0.05 | 30 | 50 | 15 | 20 | 120 | 50 | hollow |

As is evident from the data of Table 7, all the samples gave filaments of excellent quality in which no fusion bond occurred after sintering.

As is evident from the data of Table 8, hollow fibers were obtained in all the runs.

Example 5

An organic silazane polymer was prepared according to the process of U.S. Patent No. 4,771,118. A dry 2-liter four-necked flask equipped with a stirrer, a thermometer, an ammonia admission tube, and a water-cooled condenser was charged with 1500 ml of hexane. To the flask were added 80.5 grams of methyldichlorosilane, 14.9 grams of methyltrichlorosilane, and 25.8 grams of dimethyldichlorosilane. Excess gaseous ammonia was introduced into the solution at room temperature at a flow rate of 90 liter/hour for 1-1/4 hours. The total amount of ammonia added was 5.0 mol. The reaction mixture was allowed to stand at room temperature while the condenser was replaced by an air-cooled condenser for allowing the unreacted ammonia to escape from the flask. The ammonium chloride by-product was removed from the reaction mixture by filtration in a dry box. The cake was then washed three times with 1.5 liters of hexane. The filtrate was stripped of the hexane under a vacuum of 133.3 Pa (1 mmHg)at 60 °C. The residue or ammonolysis product was a clear free-flowing liquid in a yield of 52.5 grams.

Next, a 500-ml three-necked flask equipped with a stirrer, a thermometer, and a dropping funnel was placed in a dry box and charged with 0.4 grams of potassium hydride and 250 ml of tetrahydrofuran (THF) which had been dehydrated with NaH. The flask was taken out of the dry box and connected to a nitrogen gas tube. While the mixture was stirred at room temperature to disperse potassium hydride, 52.5 grams of the ammonolysis product in 100 ml of THF was slowly added to the mixture over one hour through the dropping funnel. Large amounts of gases evolved during the addition. After 2 hours, the reaction temperature was raised to the reflux temperature of THF and maintained at the temperature for a further 1-1/2 hours. The gases ceased to evolve after 3-1/2 hours from the start of reaction. The flask was cooled down to room temperature before 4 grams of methyl iodide was added, yielding a white precipitate of KI. The reaction mixture was stirred for a further 30 minutes and then distilled of the majority of THF solvent under vacuum to leave a white slurry, to which 100 ml of hexane was added. The mixture was filtered and the filtrate was stripped of the hexane under a vacuum of 133.3 Pa (1 mmHg) at 180 °C, yielding 49 grams of a silazane polymer in the form of a viscous solid. The polymer had a melting point of 128 °C and a molecular weight of 1365 as measured by a benzene molar depression of freezing point method. It was soluble in hexane, benzene, THF and other organic solvents. An IR analysis of the polymer showed absorption peaks at 3400 $cm^{-1}$ for NH, 2980 $cm^{-1}$ for C-H, 2150 $cm^{-1}$ for Si-H, and 1260 $cm^{-1}$ for $Si\text{-}CH_3$.

The silazane polymer designated Polymer D was heated at 150 °C and melt spun through a spinneret having an orifice of 0.2 mm in diameter. The resulting green or pre-ceramic filaments had a diameter of 13 to 14 µm.

The filaments in a weight of 0.1 to 0.2 grams were rested in an alumina boat, which was placed in a mullite tube furnace of 50 mm in diameter. After the furnace was purged with an inert gas of $N_2$ or Ar, the furnace was ready for the first infusibilizing step. Nitrogen gas was passed through a bubbling apparatus charged with trichlorosilane, obtaining a nitrogen gas containing trichlorosilane gas in a predetermined concentration. The concentration of trichlorosilane gas was controlled in terms of temperature. The trichlorosilane-carrying nitrogen gas was passed through the furnace.

The second infusibilizing step was carried out by purging the furnace with an inert gas of $N_2$ or Ar again. The filaments were treated with ammonia gas or ammonia gas diluted with nitrogen gas in the concentration shown in Table 5, making the filaments infusible. After the filaments were treated with ammonia gas for a predetermined time, the furnace was purged with nitrogen gas again and heated to a temperature of 1200 °C at a rate of 150 °C/hour in a nitrogen stream. The filaments were pyrolyzed at the temperature for 30 minutes and then cooled down.

Tables 9 and 10 show the conditions for the trichlorosilane treatment, ammonia gas treatment, and sintering as well as the appearance of sintered filaments.

Table 9

| Sample No. | Trichlorosilane treatment (first step) Gas conc. (mol/l) | Treat time (min.) | Sample temp. (°C) | Ammonia gas treatment (second step) Gas conc. (vol%) | Treat time (min.) | Sample temp. (°C) | Appearance of filaments after sintering |
|---|---|---|---|---|---|---|---|
| 49 | 0.001 | 15 | r.t. | 7 | 5 | r.t. | slight fusion bonds |
| 50 | 0.001 | 15 | r.t. | 7 | 30 | r.t. | no fusion bond, good |
| 51 | 0.001 | 30 | 50 | 7 | 30 | 50 | good |
| 52 | 0.001 | 30 | 80 | 7 | 30 | 80 | good |
| 53 | 0.1 | 5 | 50 | 7 | 30 | 80 | good |
| 54 | 0.1 | 5 | 50 | 100 | 5 | 80 | good |

r.t.: room temperature

Table 10

| Sample No. | Trichlorosilane treatment (first step) Gas conc. (mol/l) | Treat time (min.) | Sample temp. (°C) | Ammonia gas treatment (second step) Gas conc. (vol%) | Treat time (min.) | Sample temp. (°C) | Shape of fibers after sintering |
|---|---|---|---|---|---|---|---|
| 55 | 0.001 | 15 | r.t. | 7 | 60 | r.t. | hollow |
| 56 | 0.001 | 15 | r.t. | 7 | 120 | r.t. | hollow |
| 57 | 0.001 | 30 | 50 | 7 | 120 | 50 | hollow |
| 58 | 0.1 | 5 | 50 | 2 | 180 | 50 | hollow |
| 59 | 0.1 | 5 | 50 | 0.5 | 240 | 50 | hollow |

r.t.: room temperature

As is evident from the data of Table 9, the sintered filaments of sample No. 49 fusion bonded together in some areas where they had been in close contact. Sample Nos. 50 to 53 gave very good sintered filaments free of a fusion bond since they had been made fully infusible prior to sintering.

The sintered filaments of sample No. 51 were measured for physical properties to find a tensile strength of 2,352 N/mm$^2$ (240 kg/mm$^2$) and a tensile modulus of 235.2 kN/mm$^2$ (24 t/mm$^2$) at a filament diameter of 10.4 $\mu$m. They were found to be ceramic filaments composed mainly of SiC and $Si_3N_4$ and having a composition: Si 61.47%, C 18.56%, and N 19.97%.

As is evident from the data of Table 10, all the fibers were in hollow shape at the end of sintering. The sintered fibers of sample No. 57 were measured for physical properties. It was found from a photomicrograph of fiber cross section under a scanning electron microscope with a magnification X3,500 that the fibers were of hollow shape having an outer diameter of about 11 $\mu$m and an inner diameter of about 5 $\mu$m. They had a tensile strength of 1,176 N/mm$^2$ (120 kg/mm$^2$) and a tensile modulus of 127.4 kN/mm$^2$ (13 t/mm$^2$).

They were found to be ceramic fibers composed mainly of SiC and $Si_3N_4$ and having a composition: Si 61.5%, C 18.6%, and N 20.0%. An X-ray diffraction analysis of sample No. 57 was quite similar to the diagram of FIG. 2, indicating that the fibers were amorphous. The fibers were further heated at 1,700 °C and analyzed by X-ray diffraction again, which was quite similar to the diagram of FIG. 3, demonstrating that the fibers were of ceramics composed of SiC and $Si_3N_4$.

Example 6

Filaments having a diameter of 12 to 13 µm obtained by melt spinning Polymer D in Example 5 were infusibilized and sintered by the same procedures as in Example 5 except that the infusibilizing agent used in the first infusibilizing step was changed.

Tables 11 and 12 show the conditions for the first and second infusibilizing steps as well as the appearance of sintered filaments.

Table 11

| Sample No. | Type of agent | First step: Gas Conc. (mol/l) | First step: Treat time (min.) | First step: Sample temp. (°C) | Second step (Ammonia gas treatment): Gas conc. (vol%) | Second step (Ammonia gas treatment): Treat time (min.) | Second step (Ammonia gas treatment): Sample temp. (°C) | Appearance of filaments after sintering |
|---|---|---|---|---|---|---|---|---|
| 60 | $H(CH_3)SiCl_2$ | 0.02 | 15 | 50 | 10 | 30 | 50 | good |
| 61 | $SiCl_4$ | 0.02 | 15 | 100 | 10 | 30 | 100 | good |
| 62 | $BCl_3$ | 0.02 | 30 | 50 | 10 | 30 | 50 | good |
| 63 | $PCl_3$ | 0.02 | 30 | 100 | 10 | 30 | 100 | good |
| 64 | $TiCl_4$ | 0.05 | 30 | 100 | 10 | 30 | 100 | slight fusion bonds |
| 65 | $AlCl_3$ | 0.05 | 30 | 100 | 10 | 30 | 100 | slight fusion bonds |
| 66 | 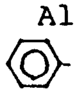-$SiCl_3$ | 0.1 | 15 | 100 | 10 | 30 | 100 | good |

r.t.: room temperature

Table 12

| Sample No. | Type of agent | First step: Gas Conc. (mol/l) | First step: Treat time (min.) | First step: Sample temp. (°C) | Second step (Ammonia gas treatment): Gas conc. (vol%) | Second step (Ammonia gas treatment): Treat time (min.) | Second step (Ammonia gas treatment): Sample temp. (°C) | Shape of fibers after sintering |
|---|---|---|---|---|---|---|---|---|
| 67 | $SiCl_4$ | 0.02 | 15 | 50 | 10 | 60 | 50 | hollow |
| 68 | $SiCl_4$ | 0.02 | 15 | 100 | 7 | 120 | 50 | hollow |
| 69 | $BCl_3$ | 0.02 | 30 | 70 | 7 | 180 | 50 | hollow |
| 70 | $PCl_3$ | 0.02 | 30 | 70 | 7 | 180 | 50 | hollow |
| 71 | $TiCl_4$ | 0.02 | 30 | 80 | 7 | 240 | 50 | hollow |
| 72 | $AlCl_3$ | 0.02 | 30 | 80 | 7 | 180 | 50 | hollow |
| 73 | $AlCl_3$ | 0.005 | 30 | 80 | 5 | 180 | 50 | hollow |

As is evident from the data of Table 11, better results were obtained when boron, phosphorus, titanium, and aluminum compounds were used as the infusibilizing agent in the first step instead of the silicon compound. In particular, the sintered filaments of sample No. 62 showed outstanding physical properties, a tensile strength of 2,450 N/mm$^2$ (250 kg/mm$^2$) and a tensile modulus of 225.4 kN/mm$^2$ (23 t/mm$^2$) at a filament diameter of 9.2 $\mu$m.

As is evident from the data of Table 12, better results were obtained when boron, phosphorus, titanium, and aluminum compounds were used as the infusibilizing agent in the first step instead of the silicon compound. In particular, the sintered hollow fibers of sample No. 70 which were treated with $PCl_3$ had an outer diameter of 12 $\mu$m and showed outstanding physical properties, a tensile strength of 1,470 N/mm$^2$ (150 kg/mm$^2$) and a tensile modulus of 137.2 kN/mm$^2$ (14 t/mm$^2$).

Example 7

The starting mixture was a mixture of methyldichlorosilane, 1,2-bis(methyldichlorosilyl)ethane, and methyltrichlorosilane in a proportion of 75:10:15 in mol%. A silazane polymer designated Polymer E was obtained by following the procedure of Example 5, that is, by reacting the chlorosilane mixture with ammonia and subjecting the ammonolysis product to deprotonation condensation in the presence of KH. The polymer had a melting point of 90 °C and a molecular weight of 820 as measured by a benzene molar depression of freezing point method.

Using spinning equipment as in Example 5, the silazane polymer designated Polymer E was melt spun at 110 °C into pre-ceramic filaments having a diameter of 13 to 14 $\mu$m. The filaments were placed in a mullite tube furnace, infusibilized by the same procedures as in Example 5 except that the infusibilizing agent and treating conditions were changed, and finally sintered as in Example 5.

Tables 13 and 14 show the conditions for the first and second infusibilizing steps as well as the appearance of sintered filaments.

Table 13

| Sample No. | Type of agent | First step: Gas Conc. (mol/l) | First step: Treat time (min.) | First step: Sample temp. (°C) | Second step (Ammonia gas treatment): Gas conc. (vol%) | Second step (Ammonia gas treatment): Treat time (min.) | Second step (Ammonia gas treatment): Sample temp. (°C) | Appearance of filaments after sintering |
|---|---|---|---|---|---|---|---|---|
| 74 | $(CH_2=CH)CH_3SiCl_2$ | 0.05 | 15 | r.t. | 10 | 30 | r.t. | slight fusion bonds |
| 75 | $(CH_2=CH)CH_3SiCl_2$ | 0.05 | 60 | r.t. | 10 | 60 | 50 | good, no fusion bond |
| 76 | $(CH_2=CH)SiCl_3$ | 0.02 | 15 | 50 | 10 | 30 | 50 | good |
| 77 | $ZrCl_4$ | 0.02 | 15 | 50 | 10 | 60 | 50 | good |
| 78 | $PBr_3$ | 0.02 | 30 | 50 | 10 | 60 | 50 | good |
| 79 | $PCl_5$ | 0.02 | 30 | 50 | 10 | 60 | 50 | good |

r.t.: room temperature

Table 14

| | First step | | | | Second step (Ammonia gas treatment) | | | |
|---|---|---|---|---|---|---|---|---|
| Sample No. | Type of agent | Gas Conc. (mol/1) | Treat time (min.) | Sample temp. (ºC) | Gas conc. (vol%) | Treat time (min.) | Sample temp. (ºC) | Shape of fibers after sintering |
| 80 | $SiCl_4$ | 0.05 | 30 | 50 | 10 | 60 | 50 | hollow |
| 81 | $CH_3SiCl_3$ | 0.05 | 30 | 50 | 7 | 240 | 50 | hollow |
| 82 | $(CH_2{=}CH)SiCl_3$ | 0.02 | 30 | 30 | 7 | 360 | 50 | hollow |
| 83 | $ZrCl_4$ | 0.02 | 30 | 50 | 7 | 180 | 50 | hollow |
| 84 | $PBr_3$ | 0.02 | 30 | 50 | 7 | 180 | 50 | hollow |
| 85 | $PCl_5$ | 0.02 | 30 | 50 | 7 | 180 | 50 | hollow |

As is evident from the data of Table 13, all the samples showed very good results except sample No. 74 in which the sintered filaments were lightly fusion bonded together.

As is evident from the data of Table 14, hollow fibers were obtained in all the runs.

Example 8

A silazane polymer was prepared from a halosilane mixture according to the process of Japanese Patent Application No. 313264/1987. The starting mixture was a mixture of dimethyldichlorosilane and methylvinyldichlorosilane in a proportion of 50:50 in mol%. The chlorosilane mixture was reacted with ammonia in hexane solvent. The resulting ammonolysis product, 30 grams, was polymerized at 280°C in the presence of 0.3 grams of KOH, yielding 24 grams of a silazane polymer designated Polymer F. The polymer had a melting point of 116°C and a molecular weight of 1520 as measured by a benzene molar depression of freezing point method. An IR analysis showed absorption peaks at 3400 $cm^{-1}$ for NH, 2980 $cm^{-1}$ for C-H, 1420 $cm^{-1}$ for $CH_2=CH$, and 1260 $cm^{-1}$ for $Si\text{-}CH_3$.

Polymer F was melt spun at 135°C by the same procedure as in Example 5, forming pre-ceramic filaments having a diameter of 12 to 13 μm. The filaments were placed in a mullite tube furnace, infusibilized by the same procedures as in Example 5 except that the infusibilizing agent and treating conditions were changed, and finally pyrolyzed at 1200°C as in Example 5.

Tables 15 and 16 show the conditions for the first and second infusibilizing steps as well as the appearance of sintered filaments.

Table 15

| Sample No. | Type of agent | First step: Gas Conc. (mol/l) | First step: Treat time (min.) | First step: Sample temp. (°C) | Second step (Ammonia gas treatment): Gas conc. (vol%) | Second step (Ammonia gas treatment): Treat time (min.) | Second step (Ammonia gas treatment): Sample temp. (°C) | Appearance of filaments after sintering |
|---|---|---|---|---|---|---|---|---|
| 86 | $CH_3SiCl_3$ | 0.02 | 30 | 50 | 10 | 60 | 50 | good, no fusion bond |
| 87 | $(CH_2=CH)SiCl_3$ | 0.02 | 30 | 50 | 10 | 60 | 50 | good |
| 88 | $SiCl_4$ | 0.02 | 30 | 50 | 10 | 60 | 50 | good |
| 89 | $HSiCl_3$ | 0.02 | 15 | r.t. | 10 | 30 | 50 | good |
| 90 | $SnCl_4$ | 0.1 | 60 | 50 | 10 | 60 | 50 | good |
| 91 | $FeCl_3$ | 0.1 | 60 | 50 | 10 | 60 | 50 | good |

r.t.: room temperature

Table 16

| Sample No. | Type of agent | First step Gas Conc. (mol/l) | Treat time (min.) | Sample temp. (°C) | Second step (Ammonia gas treatment) Gas conc. (vol%) | Treat time (min.) | Sample temp. (°C) | Shape of fibers after sintering |
|---|---|---|---|---|---|---|---|---|
| 92 | $CH_3SiCl_3$ | 0.02 | 30 | 40 | 7 | 120 | 60 | hollow |
| 93 | $SiCl_4$ | 0.02 | 30 | 40 | 5 | 120 | 50 | hollow |
| 94 | $(CH_2{=}CH)SiCl_3$ | 0.02 | 30 | 40 | 7 | 120 | 60 | hollow |
| 95 | $FeCl_3$ | 0.1 | 30 | 50 | 7 | 120 | 50 | hollow |
| 96 | $SnCl_4$ | 0.05 | 30 | 50 | 7 | 120 | 50 | hollow |

As is evident from the data of Table 15, all the samples gave filaments of excellent quality in which no fusion bond occurred after sintering.

As is evident from the data of Table 16, hollow fibers were obtained in all the runs.

Comparative Example

Using spinning equipment as in Example 1, the silazane polymers A to F prepared in the preceding Examples were melt spun into filaments having a diameter of 12 to 14 µm. By approximately following the procedures of Example 1, the filaments of each lot in a weight of 0.05 to 0.2 grams were rested in an alumina boat, placed in a mullite tube furnace, treated with various infusibilizing agents or wet air under various conditions, and then heated at a rate of 200 °C/hour and sintered at 1200 °C for 30 minutes. It was evaluated how the filaments were made infusible prior to sintering.

Table 17 shows the results of the samples in which the first step was omitted and only the second step, that is, wet air treatment was carried out for infusibilization. The wet air used was adjusted to a relative humidity of 100% at room temperature.

Table 18 shows the results of the samples in which the first step was omitted and only the second step, that is, ammonia gas treatment was carried out for infusibilization. Ammonia gas was passed without dilution at a rate of 5 liter/min.

Table 19 shows the results of the samples in which only the first step was carried out for infusibilization and the second step was omitted.

Table 17 Wet Air Treatment

| Sample No. | Type of polymer | Infusibilization Sample temp. (°C) | Infusibilization Treating time (hr.) | Appearance of filaments after sintering |
|---|---|---|---|---|
| 97 | A | r.t. | 1/2 | completely melted, leaving no fibrous shape |
| 98 | A | r.t. | 2 | completely melted, leaving no fibrous shape |
| 99 | A | 60 | 17 | almost melted, leaving slight fibrous shape |
| 100 | A | 60 | 30 | almost melted, leaving slight fibrous shape |
| 101 | B | r.t. | 1/2 | completely melted |
| 102 | B | r.t. | 10 | completely melted |
| 103 | B | 60 | 30 | almost melted |
| 104 | C | 60 | 30 | almost melted |

Table 18 Ammonia Treatment

| Sample No. | Type of polymer | Infusibilization: Sample temp. (°C) | Infusibilization: Treating time (hr.) | Appearance of filaments after sintering |
|---|---|---|---|---|
| 105 | D | r.t. | 1/2 | completely melted, leaving no fibrous shape |
| 106 | D | r.t. | 2 | completely melted, leaving no fibrous shape |
| 107 | D | 60 | 17 | almost melted, leaving slight fibrous shape |
| 108 | D | 60 | 30 | almost melted, leaving slight fibrous shape |
| 109 | E | r.t. | 1/2 | completely melted |
| 110 | E | r.t. | 10 | completely melted |
| 111 | E | 60 | 30 | almost melted |
| 112 | F | 60 | 30 | almost melted |

Table 19 First Step Only

| Sample No. | Type of polymer | Infusibilization: Type of agent | Gas conc. (mol/l) | Treat time (min) | Sample temp. (°C) | Appearance of filaments after sintering |
|---|---|---|---|---|---|---|
| 113 | A & D | $HSiCl_3$ | 0.02 | 30 | r.t. | completely fusion bonded |
| 114 | A & D | $HSiCl_3$ | 0.02 | 60 | 50 | completely fusion bonded |
| 115 | A & D | $HSiCl_3$ | 0.04 | 120 | 50 | markedly fusion bonded, leaving some fibrous shape |
| 116 | B & E | $SiCl_4$ | 0.02 | 60 | r.t. | completely fusion bonded |
| 117 | B & E | $CH_2=CHSiCl_3$ | 0.02 | 60 | r.t. | completely fusion bonded |
| 118 | B & E | $BCl_3$ | 0.02 | 60 | r.t. | completely fusion bonded |
| 119 | B & E | $TiCl_4$ | 0.02 | 60 | r.t. | completely fusion bonded |
| 120 | C & F | $HSiCl_3$ | 0.02 | 60 | r.t. | completely fusion bonded |
| 121 | C & F | $BCl_3$ | 0.02 | 60 | r.t. | completely fusion bonded |
| 122 | C & F | $ZrCl_4$ | 0.02 | 60 | r.t. | completely fusion bonded |

r.t.: room temperature

As is evident from the results of Tables 17 to 19, a single infusibilizing step, either the first step (infusibilizing agent) or the second step (wet air or ammonia gas), was insufficient to render the filaments infusible even when treating conditions were varied over a wide range.

Sample No. 115 which retained a vague fibrous shape in some areas was measured for physical properties to find a tensile strength of 490 $N/mm^2$ (50 $kg/mm^2$) and a tensile modulus of 58.8 $kN/mm^2$ (6 $t/mm^2$) at a filament diameter of 9.7 $\mu m$.

Several preferred embodiments have been described. Obviously many modifications and variations of the present invention are possible in the light of the above teachings. It is therefore to be understood that within the scope of the appended claims, the invention may be practiced otherwise than as specifically described.

## Claims

1. A method for infusibilizing an organic silazane polymer, comprising the steps of melting, shaping, and then infusibilizing the organic silazane polymer, the infusibilizing step including

   treating the shaped polymer with a gas containing the vapor of at least one compound selected from the group consisting of

   silicon compounds of formula (1):

   (1) $R_aSiX_{4-a}$

   wherein R is a radical selected from the group consisting of hydrogen, lower alkyl having 1 to 3 carbon atoms, alkenyl, and aryl radicals, X is a chlorine, bromine or iodine atom, and letter a has a value of from 0 to 2, when a is equal to 2, R radicals may be the same or different;

   boron compounds of formula (2):

   (2) $BX_3$

   wherein X is as defined above;

   phosphorus compounds of formula (3):

   (3) $PX_b$

   wherein X is as defined above, and letter b is equal to 3 or 5; and

   metal compounds of formula (4):

   (4) $MX_c$

   wherein M is a metal selected from the group consisting of Al, Ti, V, Fe, Ga, Ge, Zr, Nb, Sn, Sb, Te, Ta, W, and Bi, letter c is a number equal to the valence of the metal, and X is as defined above, and then treating the shaped polymer with a water vapor-containing gas or ammonia-containing gas at a temperature lower by 20 to 100 °C than the melting point of the organic silazane polymer.

2. The method of claim 1 wherein the organic silazane polymer is obtained by reacting a mixture of methyldichlorosilane, methyltrichlorosilane, and dimethyldichlorosilane with ammonia to form an ammonolysis product, and condensing the ammonolysis product in the presence of a basic catalyst capable of deprotonation.

3. The method of claim 2 wherein the mixture contains methyldichlorosilane, methyltrichlorosilane, and dimethyldichlorosilane in proportions of 55-80 : 10-30 : 5-25 in mol%.

4. The method of claim 1 wherein the organic silazane polymer is obtained by reacting a mixture of (i) at least one member selected from the group consisting of organic silicon compounds of general formula (I):

   (I) 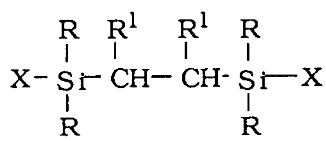

   wherein R is a radical selected from the group consisting of hydrogen, chlorine, bromine, methyl, ethyl, phenyl, and vinyl radicals, $R^1$ is hydrogen or a methyl radical, and X is chlorine or bromine, and organic

silicon compounds of general formula (II):

(II) 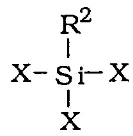

wherein $R^2$ is a radical selected from the group consisting of hydrogen, methyl, ethyl, phenyl, and vinyl radicals, and X is as defined above, and (ii) an organic silicon compound of general formula (III):

(III) 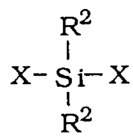

wherein $R^2$ and X are as defined above, with ammonia, and deprotonation condensing the resulting ammonolysis product.

**5.** The method of claim 4 wherein the mixture contains compounds of formulae (I), (II), and (III) in proportions of 1-25 : 1-25 : 50-80 mol%.

**6.** The method of claim 1 wherein the organic silazane polymer is obtained by reacting a mixture of (i) at least one member of organic silicon compounds of general formula (IV):

(IV) 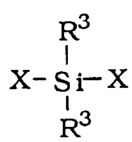

wherein $R^3$ is a radical selected from the group consisting of methyl, ethyl, and phenyl radicals, and X is chlorine or bromine, and (ii) at least one member of organic silicon compounds of general formula (V):

(V) 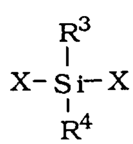

wherein $R^3$ and X are as defined above, and $R^4$ is hydrogen or a vinyl radical, with ammonia to form a silazane compound, and polymerizing the silazane compound in the presence of an alkali catalyst.

**7.** The method of claim 6 wherein the mixture contains compounds of formula (IV) and (V) in proportions of from 20:80 to 90:10 in mol%.

**8.** The method of claim 1 wherein the organic silazane polymer is obtained by heat polymerizing hexamethylcyclotrisilazane having the unit:

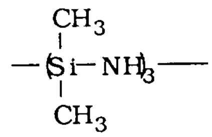

in the presence of KOH.

**9.** The method of claim 1 wherein the compound is selected from the group consisting of $CH_3SiCl_3$, $(CH_3)_2SiCl_2$, $(C_2H_5)SiCl_3$, $(C_2H_5)_2SiCl_2$, $C_6H_5SiCl_3$, $(C_6H_5)_2SiCl_2$, $CH_2=CHSiCl_3$, $(CH_2=CH)_2SiCl_2$, $HSiCl_3$, $H_2SiCl_2$, $SiCl_4$, $H(CH_3)SiCl_2$, $H(CH_2=CH)SiCl_2$, $(CH_2=CH)C_6H_5SiCl_2$, $BCl_3$, $BBr_3$, $BI_3$, $PCl_3$, $PCl_5$, $PBr_3$, $PI_3$, $AlCl_3$, $TiCl_4$, $FeCl_3$, $VCl_4$, $GaCl_3$, $GeCl_4$, $ZrCl_4$,$NbCl_5$, $SnCl_4$, $SbCl_3$, $TaCl_5$, $TeCl_4$, $WCl_5$, and $BiCl_3$.

**10.** The method of claim 1 wherein the compound is selected from the group consisting of $H(CH_3)SiCl_2$, $HSiCl_3$, $BCl_3$, $PCl_3$, $AlCl_3$, and $TiCl_4$.

**11.** The method of claim 1 wherein in the step of treating the shaped polymer with a gas containing the vapor of at least one compound selected from compounds of formulae (1) to (4), the shaped polymer is treated with an inert gas containing 0.0001 to 0.1 mol/liter of at least one compound selected from compounds of formulae (1) to (4) in vapor form at a temperature lower by 20 to 100 °C than the melting point of the organic silazane polymer for 5 to 240 minutes.

**12.** The method of claim 1 wherein the water vapor-containing gas is air or an inert gas containing water vapor in a saturated condition.

**13.** The method of claim 1 wherein the ammonia-containing gas is gaseous ammonia alone or an inert gas containing at least 0.01% by volume of gaseous ammonia.

**14.** The method of claim 1 wherein the step of treating the shaped polymer with water vapor-containing gas or ammonia-containing gas is for 5 to 240 minutes.

**15.** A method for preparing a hollow ceramic fiber, comprising the steps of:
(A) melt spinning an organic silazane polymer into a fiber,
(B) treating the surface of the fiber with a gas containing the vapor of at least one compound selected from the group consisting of
silicon compounds of formula (1)

(1) $R_aSiX_{4-a}$

wherein R is a radical selected from the group consisting of hydrogen, lower alkyl having 1 to 3 carbon atoms, alkenyl, and aryl radicals, X is a chlorine, bromine or iodine atom, and letter a has a value of from 0 to 2, R radicals may be the same or different when a is equal to 2;
boron compounds of formula (2):

(2) $BX_3$

wherein X is as defined above;
phosphorus compounds of formula (3):

(3) $PX_b$

wherein X is as defined above, and letter b is equal to 3 or 5; and
metal compounds of formula (4):

(4) $MX_c$

wherein M is a metal selected from the group consisting of Al, Ti, V, Fe, Ga, Ge, Zr, Nb, Sn, Sb, Te, Ta, W, and Bi, letter c is a number equal to the valence of the metal, and X is as defined above,
(C) subjecting the fiber to hydrolysis with a water vapor-containing gas or ammonolysis with ammonia-containing gas at a temperature lower by 20 to 100 °C than the melting point of the organic silazane compound, thereby forming an infusible layer on the fiber surface, and
(D) subjecting the fiber to pyrolysis to form a hollow ceramic fiber having an empty interior.

**16.** The method of claim 15 wherein the organic silazane polymer is obtained by reacting a mixture of methyldichlorosilane, methyltrichlorosilane, and dimethyldichlorosilane with ammonia to form an ammonolysis product, and condensing the ammonolysis product in the presence of a basic catalyst capable of deprotonation.

**17.** The method of claim 16 wherein the mixture contains methyldichlorosilane, methyltrichlorosilane, and dimethyldichlorosilane in proportions of 55-80 : 10-30 : 5-25 in mol%.

**18.** The method of claim 15 wherein the organic silazane polymer is obtained by reacting a mixture of (i) at least one member selected from the group consisting of organic silicon compounds of general formula (I):

(I) 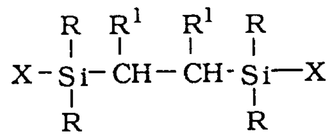

wherein R is a radical selected from the group consisting of hydrogen, chlorine, bromine, methyl, ethyl, phenyl, and vinyl radicals, $R^1$ is hydrogen or a methyl radical, and X is chlorine or bromine, and organic silicon compounds of general formula (II):

(II) 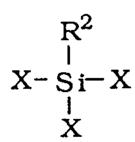

wherein $R^2$ is a radical selected from the group consisting of hydrogen, methyl, ethyl, phenyl, and vinyl radicals, and X is as defined above, and (ii) an organic silicon compound of general formula (III):

(III) 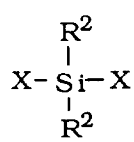

wherein $R^2$ and X are as defined above, with ammonia, and deprotonation condensing the resulting ammonolysis product.

**19.** The method of claim 18 wherein the mixture contains compounds of formulae (I), (II), and (III) in proportions of 1-25 : 1-25 : 50-80 mol%.

**20.** The method of claim 15 wherein the organic silazane polymer is obtained by reacting a mixture of (i) at least one member of organic silicon compounds of general formula (IV):

(IV) 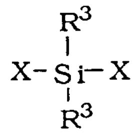

wherein $R^3$ is a radical selected from the group consisting of methyl, ethyl, and phenyl radicals, and X is chlorine or bromine, and (ii) at least one member of organic silicon compounds of general formula (V):

(V) 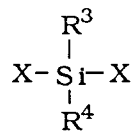

wherein $R^3$ and X are as defined above, and $R^4$ is hydrogen or a vinyl radical, with ammonia to form a silazane compound, and polymerizing the silazane compound in the presence of an alkali catalyst.

**21.** The method of claim 20 wherein the mixture contains compounds of formula (IV) and (V) in proportions of from 20:80 to 90:10 in mol%.

**22.** The method of claim 15 wherein the organic silazane polymer is obtained by heat polymerizing hexamethylcyclotrisilazane having the unit:

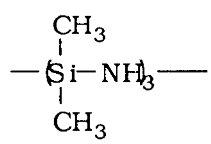

in the presence of KOH.

**23.** The method of claim 15 wherein the compound used in step (B) is selected from the group consisting of $CH_3SiCl_3$, $(CH_3)_2SiCl_2$, $(C_2H_5)SiCl_3$, $(C_2H_5)_2SiCl_2$, $C_6H_5SiCl_3$, $(C_6H_5)_2SiCl_2$, $CH_2=CHSiCl_3$, $(CH_2=CH)_2SiCl_2$, $HSiCl_3$, $H_2SiCl_2$, $SiCl_4$, $H(CH_3)SiCl_2$, $H(CH_2=CH)SiCl_2$, $(CH_2=CH)C_6H_5SiCl_2$, $BCl_3$, $BBr_3$, $BI_3$, $PCl_3$, $PCl_5$, $PBr_3$, $PI_3$, $AlCl_3$, $TiCl_4$, $FeCl_3$, $VCl_4$, $GaCl_3$, $GeCl_4$, $ZrCl_4$,$NbCl_5$, $SnCl_4$, $SbCl_3$, $TaCl_5$, $TeCl_4$, $WCl_5$, and $BiCl_3$.

**24.** The method of claim 15 wherein the compound is selected from the group consisting of $H(CH_3)SiCl_2$, $HSiCl_3$, $BCl_3$, $PCl_3$, $AlCl_3$, and $TiCl_4$.

**25.** The method of claim 15 wherein in step (B), the fiber is treated with an inert gas containing 0.0001 to 0.1 mol/liter of at least one compound selected from compounds of formulae (1) to (4) in vapor form at a temperature lower by 20 to 100 °C than the melting point of the organic silazane polymer for 5 to 240 minutes.

**26.** The method of claim 15 wherein the water vapor-containing gas used in step (C) is air or an inert gas containing water vapor in a saturated condition.

**27.** The method of claim 15 wherein the ammonia-containing gas used in step (C) is gaseous ammonia alone or an inert gas containing at least 0.01% by volume of gaseous ammonia.

**28.** The method of claim 15, 26 or 27 wherein step (C) is at a temperature in the range of from 0 °C to a temperature lower by 30 °C than the melting point of the organic silazane polymer for 30 to 360

minutes.

## Patentansprüche

1. Verfahren zum Unschmelzbarmachen eines organischen Silazanpolymeren, umfassend die Schritte des Schmelzens, Formens und danach Unschmelzbarmachens des organischen Silazanpolymeren, wobei der Schritt des Unschmelzbarmachens

   das Behandeln des geformten Polymeren mit einem Gas, welches den Dampf mindestens einer Verbindung enthält, welche aus der

   Siliciumverbindungen der Formel (I):

   (1) $R_aSiX_{4-a}$

   worin R ein Rest ist, welcher aus der Wasserstoff, Niederalkyl- mit 1 bis 3 Kohlenstoffatomen, Alkenyl- und Arylreste umfassenden Gruppe gewählt ist, X ein Chlor-, Brom- oder Iodatom ist, und der Buchstabe a einen Wert von 0 bis 2 hat, wobei, wenn a gleich 2 ist, die R-Reste gleich oder verschieden sein können;

   Borverbindungen der Formel (2):

   (2) $BX_3$

   worin X wie oben definiert ist;

   Phosphorverbindungen der Formel (3):

   (3) $PX_b$

   worin X wie oben definiert ist und der Buchstabe b gleich 3 oder 5 ist; und

   Metallverbindungen der Formel (4):

   (4) $MX_c$

   worin M ein Metall ist, welches aus der Al, Ti, V, Fe, Ga, Ge, Zr, Nb, Sn, Sb, Te, Ta, W und Bi umfassenden Gruppe gewählt ist, und der Buchstabe c eine Zahl gleich der Wertigkeit des Metalls ist, und X wie oben definiert ist, umfassenden Gruppe gewählt wird, und danach das Behandeln des geformten Polymeren mit einem wasserdampfhaltigen Gas oder ammoniakhaltigen Gas bei einer Temperatur, welche um 20 bis 100 °C niedriger ist als der Schmelzpunkt des organischen Silazanpolymeren, beinhaltet.

2. Verfahren nach Anspruch 1, wobei das organische Silazanpolymer durch Umsetzen einer Mischung aus Methyldichlorsilan, Methyltrichlorsilan und Dimethyldichlorsilan mit Ammoniak zur Bildung eines Ammonolyseprodukts und danach Kondensieren des Ammonolyseprodukts in Gegenwart eines basischen, zur Deprotonierung fähigen Katalysators erhalten wird.

3. Verfahren nach Anspruch 2, wobei die Mischung Methyldichlorsilan, Methyltrichlorsilan und Dimethyldichlorsilan in Anteilen von 55-80:10-30:5-25, bezogen auf Mol-%. enthält.

4. Verfahren nach Anspruch 1, wobei das organische Silazanpolymer durch Umsetzen einer Mischung aus (i) mindestens einem Vertreter, gewählt aus der organische Siliciumverbindungen der allgemeinen Formel (I):

   (I) 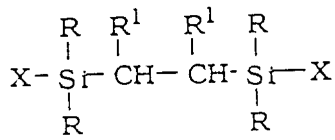

   worin R ein aus der Wasserstoff, Chlor, Brom, Methyl-, Ethyl-. Phenyl- und Vinylreste umfassenden

Gruppe gewählter Rest ist, $R^1$ Wasserstoff oder ein Methylrest ist und X Chlor oder Brom ist, und organische Siliciumverbindungen der allgemeinen Formel (II)

(II) 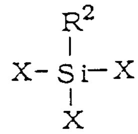

worin $R^2$ ein aus der Wasserstoff, Methyl-, Ethyl-, Phenyl- und Vinylreste umfassenden Gruppe gewählter Rest ist, und X wie oben definiert ist, umfassenden Gruppe und (ii) einer organischen Siliciumverbindung der allgemeinen Formel (III):

(III) 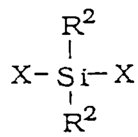

worin $R^2$ und X wie oben definiert sind, mit Ammoniak, und Deprotonierungskondensation des resultierenden Ammonolyseprodukts erhalten wird.

5. Verfahren nach Anspruch 4, wobei die Mischung Verbindungen der Formeln (I), (II) und (III) in Anteilen von 1-25:1-25:50-80 Mol-% enthält.

6. Verfahren nach Anspruch 1, wobei das organische Silazanpolymer durch Umsetzen einer Mischung aus (i) mindestens einem Vertreter aus organischen Siliciumverbindungen der allgemeinen Formel (IV):

(IV) 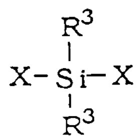

worin $R^3$ ein aus der Methyl-, Ethyl- und Phenylreste umfassenden Gruppe gewählter Rest ist, und X Chlor oder Brom ist, und (ii) mindestens einem Vertreter aus organischen Siliciumverbindungen der allgemeinen Formel (V):

(V) 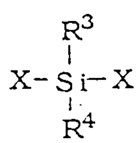

worin $R^3$ und X wie oben definiert sind, und $R^4$ Wasserstoff oder ein Vinylrest ist, mit Ammoniak zur Bildung einer Silazanverbindung und Polymerisieren der Silazanverbindung in Gegenwart eines Alkalikatalysators erhalten wird.

7. Verfahren nach Anspruch 6, wobei die Mischung Verbindungen der Formeln (IV) und (V) in Anteilen von 20:80 bis 90:10, angegeben in Mol-%, enthält.

8. Verfahren nach Anspruch 1, wobei das organische Silazanpolymer durch Wärmepolymerisation von Hexamethylcyclotrisilazan der Einheit:

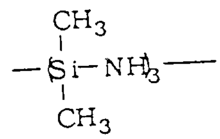

in Gegenwart von KOH erhalten wird.

**9.** Verfahren nach Anspruch 1, wobei die Verbindung aus der $CH_3SiCl_3$,$(CH_3)_2SiCl_2$, $(C_2H_5)SiCl_3$, $(C_2H_5)_2SiCl_2$, $C_6H_5SiCl_3$, $(C_6H_5)_2SiCl_2$, $CH_2=CHSiCl_3$, $(CH_2=CH)_2SiCl_2$, $HSiCl_3$, $H_2SiCl_2$, $SiCl_4$, $H(CH_3)SiCl_2$, $H(CH_2=CH)SiCl_2$, $(CH_2=CH)C_6H_5SiCl_2$, $BCl_3$, $BBr_3$, $BI_3$, $PCl_3$. $PCl_5$, $PBr_3$, $PI_3$, $AlCl_3$, $TiCl_4$, $FeCl_3$, $VCl_4$, $GaCl_3$, $GeCl_4$, $ZrCl_4$, $NbCl_5$, $SnCl_4$, $SbCl_3$, $TaCl_5$, $TeCl_4$, $WCl_5$ und $BiCl_3$ umfassenden Gruppe gewählt wird.

**10.** Verfahren nach Anspruch 1, wobei die Verbindung aus der $H(CH_3)SiCl_2$, $HSiCl_3$, $BCl_3$, $PCl_3$, $AlCl_3$ und $TiCl_4$ umfassenden Gruppe gewählt wird.

**11.** Verfahren nach Anspruch 1, wobei bei dem Schritt des Behandelns des geformten Polymeren mit einem Gas, welches den Dampf mindestens einer aus Verbindungen der Formeln (1) bis (4) gewählten Verbindung enthält, das geformte Polymer mit einem Inertgas, welches 0,0001 bis 0,1 Mol/l mindestens einer aus Verbindungen der Formeln (1) bis (4) gewählten Verbindung In Dampfform enthält, bei einer Temperatur, welche um 20 bis 100 ° C niedriger ist als der Schmelzpunkt des organischen Silazanpolymeren, während 5 bis 240 Minuten behandelt wird.

**12.** Verfahren nach Anspruch 1, wobei das wasserdampfhaltige Gas Luft oder ein Inertgas ist, welches Wasserdampf in gesättigtem Zustand enthält.

**13.** Verfahren nach Anspruch 1, wobei das ammoniakhaltige Gas gasförmiges Ammoniak alleine oder ein Inertgas ist, welches mindestens 0,01 Vol.-% gasförmiges Ammoniak enthält.

**14.** Verfahren nach Anspruch 1, wobei der Schritt des Behandelns des geformten Polymeren mit wasserdampfhaltigem Gas oder ammoniakhaltigem Gas 5 bis 240 Minuten dauert.

**15.** Verfahren zur Herstellung einer hohlen keramischen Faser, umfassend die Schritte:
(A) Schmelzspinnen eines organischen Silazanpolymeren zu einer Faser,
(B) Behandeln der Oberfläche der Faser mit einem Gas, welches den Dampf mindestens einer Verbindung enthält, gewählt aus der
Siliciumverbindungen der Formel (1)

(1) $R_aSiX_{4-a}$

worin R ein Rest ist, welcher aus der Wasserstoff, Niederalkyl- mit 1 bis 3 Kohlenstoffatomen, Alkenyl- und Arylreste umfassenden Gruppe gewählt ist, X ein Chlor-, Brom- oder Iodatom ist, und der Buchstabe a einen Wert von 0 bis 2 hat, wobei, wenn a gleich 2 ist, die R-Reste gleich oder verschieden sein können;
Borverbindungen der Formel (2):

(2) $BX_3$

worin X wie oben definiert ist;
Phosphorverbindungen der Formel (3):

(3) $PX_b$

worin X wie oben definiert ist und der Buchstabe b gleich 3 oder 5 ist; und
Metallverbindungen der Formel (4):

(4) $MX_c$

worin M ein Metall ist, welches aus der Al, Ti, V, Fe, Ga, Ge, Zr, Nb, Sn, Sb, Te, Ta, W und Bi umfassenden Gruppe gewählt ist, und der Buchstabe c eine Zahl gleich der Wertigkeit des Metalls ist, und X wie oben definiert ist, umfassenden Gruppe,

(C) Unterziehen der Faser der Hydrolyse mit einem wasserdampfhaltigen Gas oder Ammonolyse mit ammoniakhaltigem Gas bei einer Temperatur, welche 20 bis 100 °C niedriger ist als der Schmelzpunkt der organischen Silazanverbindung, wodurch eine unschmelzbare Schicht auf der Faseroberfläche gebildet wird, und

(D) Unterziehen der Faser der Pyrolyse zur Bildung einer hohlen keramischen Faser mit einem leeren Innenraum.

**16.** Verfahren nach Anspruch 15, wobei das organische Silazanpolymer durch Umsetzen einer Mischung aus Methyldichlorsilan, Methyltrichlorsilan und Dimethyldichlorsilan mit Ammoniak zur Bildung eines Ammonolyseprodukts und danach Kondensieren des Ammonolyseprodukts in Gegenwart eines basischen, zur Deprotonierung fähigen Katalysators erhalten wird.

**17.** Verfahren nach Anspruch 16, wobei die Mischung Methyldichlorsilan, Methyltrichlorsilan und Dimethyldichlorsilan in Anteilen von 55-80:10-30:5-25, bezogen auf Mol-%, enthält.

**18.** Verfahren nach Anspruch 15, wobei das organische Silazanpolymer durch Umsetzen einer Mischung aus (i) mindestens einem Vertreter, gewählt aus der organische Siliciumverbindungen der allgemeinen Formel (I):

(I) 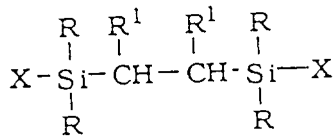

worin R ein aus der Wasserstoff, Chlor, Brom, Methyl-, Ethyl-, Phenyl- und Vinylreste umfassenden Gruppe gewählter Rest ist, $R^1$ Wasserstoff oder ein Methylrest ist und X Chlor oder Brom ist, und organische Siliciumverbindungen der allgemeinen Formel (II)

(II) 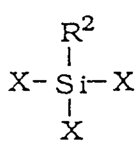

worin $R^2$ ein aus der Wasserstoff, Methyl-, Ethyl-, Phenyl- und Vinylreste umfassenden Gruppe gewählter Rest ist, und X wie oben definiert ist, umfassenden Gruppe und (ii) einer organischen Siliciumverbindung der allgemeinen Formel (III):

(III) 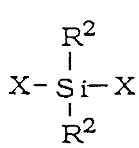

worin $R^2$ und X wie oben definiert sind, mit Ammoniak, und Deprotonierungskondensation des resultierenden Ammonolyseprodukts erhalten wird.

**19.** Verfahren nach Anspruch 18, wobei die Mischung Verbindungen der Formeln (I), (II) und (III) in Anteilen von 1-25:1-25:50-80 Mol-% enthält.

20. Verfahren nach Anspruch 15, wobei das organische Silazanpolymer durch Umsetzen einer Mischung aus (i) mindestens einem Vertreter aus organischen Siliciumverbindungen der allgemeinen Formel (IV):

(IV) 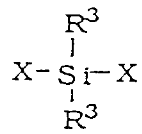

worin $R^3$ ein aus der Methyl-, Ethyl- und Phenylreste umfassenden Gruppe gewählter Rest ist, und X Chlor oder Brom ist, und (ii) mindestens einem Vertreter aus organischen Siliciumverbindungen der allgemeinen Formel (V):

(V) 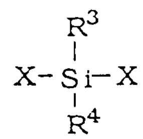

worin $R^3$ und X wie oben definiert sind, und $R^4$ Wasserstoff oder ein Vinylrest ist, mit Ammoniak zur Bildung einer Silazanverbindung und Polymerisieren der Silazanverbindung in Gegenwart eines Alkalikatalysators erhalten wird.

21. Verfahren nach Anspruch 20, wobei die Mischung Verbindungen der Formeln (IV) und (V) In Anteilen von 20:80 bis 90:10, angegeben in Mol-%, enthält.

22. Verfahren nach Anspruch 15, wobei das organische Silazanpolymer durch Wärmepolymerisation von Hexamethylcyclotrisilazan der Einheit:

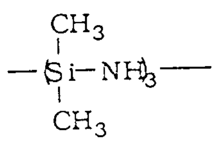

In Gegenwart von KOH erhalten wird.

23. Verfahren nach Anspruch 15, wobei die in Schritt (B) verwendete Verbindung aus der $CH_3SiCl_3$, $(CH_3)_2SiCl_2$, $(C_2H_5)SiCl_3$, $(C_2H_5)_2SiCl_2$, $C_6H_5SiCl_3$, $(C_6H_5)_2SiCl_2$, $CH_2=CHSiCl_3$, $(CH_2=CH)_2SiCl_2$, $HSiCl_3$, $H_2SiCl_2$, $SiCl_4$, $H(CH_3)SiCl_2$, $H(CH_2=CH)SiCl_2$, $(CH_2=CH)C_6H_5SiCl_2$, $BCl_3$, $BBr_3$, $BI_3$, $PCl_3$, $PCl_5$, $PBr_3$, $PI_3$, $AlCl_3$, $TiCl_4$, $FeCl_3$, $VCl_4$, $GaCl_3$, $GeCl_4$, $ZrCl_4$, $NbCl_5$, $SnCl_4$, $SbCl_3$, $TaCl_5$, $TeCl_4$, $WCl_5$ und $BiCl_3$ umfassenden Gruppe gewählt wird.

24. Verfahren nach Anspruch 15, wobei die Verbindung aus der $H(CH_3)SiCl_2$, $HSiCl_3$, $BCl_3$, $PCl_3$, $AlCl_3$ und $TiCl_4$ umfassenden Gruppe gewählt wird.

25. Verfahren nach Anspruch 15, wobei beim Schritt (B) die Faser mit einem Inertgas, welches 0,0001 bis 0,1 Mol/l mindestens einer aus Verbindungen der Formel (1) bis (4) gewählte Verbindung in Dampfform enthält, bei einer Temperatur, welche um 20 bis 100 °C niedriger ist als der Schmelzpunkt des organischen Silazanpolymeren, während 5 bis 240 Minuten behandelt wird.

26. Verfahren nach Anspruch 15, wobei das wasserdampfhaltige Gas Luft oder ein Inertgas ist, welches Wasserdampf in gesättigtem Zustand enthält.

27. Verfahren nach Anspruch 15, wobei das beim Schritt (C) verwendete, ammoniakhaltige Gas gasförmiges Ammoniak alleine oder ein Inertgas ist, welches mindestens 0,01 Vol.-% gasförmiges Ammoniak enthält.

**28.** Verfahren nach Anspruch 15, , 26 oder 27, wobei Schritt (C) bei einer Temperatur im Bereich von 0°C bis zu einer Temperatur, welche um 30°C niedriger ist als der Schmelzpunkt des organischen Silazanpolymeren, während 30 bis 360 Minuten durchgeführt wird.

## Revendications

**1.** Procédé d'infusibilisation d'un polymère organique de silazane, selon lequel on fond, on façonne et on rend ensuite infusible le polymère organique de silazane, l'étape d'infusibilisation comprenant :
le traitement du polymère façonné, avec un gaz contenant la vapeur d'au moins un composé choisi parmi :
les composés du silicium de formule (1) :

(1) $R_aSiX_{4-a}$

dans laquelle R représente un groupe choisi parmi un atome d'hydrogène, un groupe alkyle inférieur comportant de 1 à 3 atomes de carbone, un groupe alcényle et un groupe aryle, X représente un atome de chlore, de brome ou d'iode, et la lettre a correspond à une valeur de 0 à 2, et lorsque a est égal à 2, les groupes R peuvent être identiques ou différents ;
les composés du bore de formule (2) :

(2) $BX_3$

dans laquelle X est tel que défini ci-dessus ;
les composés du phosphore de formule (3) :

(3) $PX_b$

dans laquelle X est tel que défini ci-dessus, et la lettre b est égale à 3 ou 4 ; et
les composés de métal de formule (4) :

(4) $MX_c$

dans laquelle M est un métal choisi parmi Al, Ti, V, Fe, Ga, Ge, Zr, Nb, Sn, Sb, Te, Ta, W et Bi, la lettre c correspondant à un nombre égal à la valence du métal, et X est tel que défini ci-dessus, et
on traite ensuite le polymère façonné avec un gaz contenant de la vapeur d'eau ou un gaz contenant de l'ammoniac, à une température inférieure de 20 °C à 100 °C au point de fusion du polymère organique de silazane.

**2.** Procédé selon la revendication 1, dans lequel le polymère organique de silazane est obtenu en faisant réagir un mélange de méthyldichlorosilane, de méthyltrichlorosilane et de diméthyldichlorosilane, avec de l'ammoniac pour former un produit d'ammoniolyse, et on condense le produit d'ammoniolyse en présence d'un catalyseur basique capable d'effectuer une déprotonation.

**3.** Procédé selon la revendication 2, dans lequel le mélange contient du méthyldichlorosilane, du méthyltrichlorosilane et du diméthyldichlorosilane selon des proportions de 55 à 80:10 à 30:5 à 25 en moles %.

**4.** Procédé selon la revendication 1, dans lequel le polymère organique de silazane est obtenu en faisant réagir un mélange (i) d'au moins un composant choisi parmi les composés organiques du silicium de formule générale (I) :

(I) 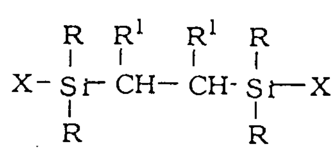

dans laquelle R représente un groupe choisi parmi un atome d'hydrogène, de chlore, de brome, un groupe méthyle, éthyle, phényle ou vinyle, $R^1$ représente un atome d'hydrogène ou un groupe méthyle, et X représente un atome de chlore ou e brome, et les composés organiques du silicium de formule générale (II) :

(II) 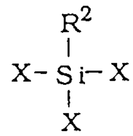

dans laquelle $R^2$ représente un groupe choisi parmi un atome d'hydrogène, les groupes méthyle, éthyle, phényle et vinyle, et X est tel que défini ci-dessus, et (ii) un composé organique du silicium de formule générale (III) :

(III) 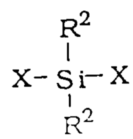

dans laquelle $R^2$ et X sont tels que définis ci-dessus avec de l'ammoniac, et en condensant par déprotonation le produit d'ammoniolyse résultant.

**5.** Procédé selon la revendication 4, dans lequel le mélange contient des composés correspondant aux formules (I), (II) et (III) selon des proportions de 1 à 25:1 à 25:50 à 80 moles %.

**6.** Procédé selon la revendication 1, dans lequel le polymère organique de silazane est obtenu en faisant réagir un mélange (i) d'au moins un composant choisi parmi les composés organiques du silicium de formule générale (IV) :

(IV) 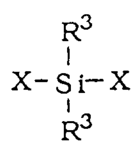

dans laquelle $R^3$ représente un groupe choisi parmi les groupes méthyle, éthyle et phényle, et X représente un atome de chlore ou de brome, et (ii) au moins un composant choisi parmi les composés organiques du silicium de formule générale (V) :

(V) 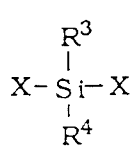

dans laquelle $R^3$ et X sont tels que définis ci-dessus, et $R^4$ représente un atome d'hydrogène ou un groupe vinyle, avec de l'ammoniac pour former un composé dérivé de silazane, et on polymérise le composé dérivé de silazane en présence d'un catalyseur alcalin.

**7.** Procédé selon la revendication 6, dans lequel le mélange contient des composés correspondant aux formules (IV) et (V) selon des proportions de 20:80 à 90:10 en moles %.

**8.** Procédé selon la revendication 1, dans lequel le polymère organique de silazane est obtenu par polymérisation à chaud d'hexaméthylcyclotrisilazane comportant le motif :

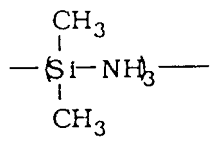

en présence de KOH.

**9.** Procédé selon la revendication 1, dans lequel le composé est choisi parmi $CH_3SiCl_3$, $(CH_3)_2SiCl_2$, $(C_2H_5)SiCl_3$, $(C_2H_5)_2SiCl_2$, $C_6H_5SiCl_3$, $(C_6H_5)_2SiCl_2$, $CH_2=CHSiCl_3$, $(CH_2=CH)_2SiCl_2$, $HSiCl_3$, $H_2SiCl_2$, $SiCl_4$, $H(CH_3)SiCl_2$, $H(CH_2=CH)SiCl_2$, $(CH_2=CH)C_6H_5SiCl_2$, $BCl_3$, $BBr_3$, $BI_3$, $PCl_3$, $PCl_5$, $PBr_3$, $PI_3$, $AlCl_3$, $TiCl_4$, $FeCl_3$, $VCl_4$, $GaCl_3$, $GeCl_4$, $ZrCl_4$, $NbCl_5$, $SnCl_4$, $SbCl_3$, $TaCl_5$, $TeCl_4$, $WCl_5$ et $BiCl_3$.

**10.** Procédé selon la revendication 1, dans lequel le composé est choisi parmi $H(CH_3)SiCl_2$, $HSiCl_3$, $BCl_3$, $PCl_3$, $AlCl_3$ et $TiCl_4$.

**11.** Procédé selon la revendication 1, selon lequel on traite le polymère façonné avec un gaz contenant la vapeur d'au moins un composé choisi parmi les composés correspondant aux formules (1) à (4), le polymère façonné étant traité avec un gaz inerte contenant de 0,0001 à 0,1 mole/l d'au moins un composé choisi parmi les composés correspondant aux formules (1) à (4) sous forme de vapeur, à une température inférieure de 20 à 100 °C au point de fusion du polymere organique de silazane, pendant 5 à 240 minutes.

**12.** Procédé selon la revendication 1, dans lequel le gaz contenant de la vapeur d'eau, est de l'air ou un gaz inerte contenant de la vapeur d'eau à saturation.

**13.** Procédé selon la revendication 1, dans lequel le gaz contenant de l'ammoniac est de l'ammoniac gazeux seul, ou un gaz inerte contenant au moins 0,01 % en volume d'ammoniac gazeux.

**14.** Procédé selon la revendication 1, dans lequel l'étape de traitement du polymère façonné avec un gaz contenant de la vapeur d'eau ou un gaz contenant de l'ammoniac, est effectuée pendant 5 à 240 minutes.

**15.** Procédé de préparation d'une fibre céramique creuse selon lequel :

(A) on file à l'état fondu un polymère organique de silazane, en une fibre,

(B) on traite la surface de la fibre avec un gaz contenant la vapeur d'au moins un composé choisi parmi :

les composés du silicium de formule (1) :

(1) $R_aSiX_{4-a}$

dans laquelle R représente un groupe choisi parmi un atome d'hydrogène, un groupe alkyle inférieur comportant de 1 à 3 atomes de carbone, un groupe alcényle et un groupe aryle, X représente un atome de chlore, de brome ou d'iode, et la lettre a a une valeur allant de 0 à 2, les groupes R pouvant être identiques ou différents lorsque a est égal à 2 ;

les composés du bore de formule (2) :

(2) $BX_3$

dans laquelle X est tel que défini ci-dessus ;

les composés du phosphore de formule (3) :

(3) $PX_b$

dans laquelle X est tel que défini ci-dessus, et la lettre b est égale à 3 ou 5 ; et

les composés de métal de formule (4) :

(4) $MX_c$

dans laquelle M représente un métal choisi parmi Al, Ti, V, Fe, Ga, Ge, Zr, Nb, Sn, Sb, Te, Ta, W et Bi, la lettre c correspondant à un nombre égal à la valence du métal, et X est tel que défini ci-dessus,

(C) on soumet la fibre à une hydrolyse avec un gaz contenant de la vapeur d'eau, ou à une ammoniolyse avec un gaz contenant de l'ammoniac, à une température inférieure de 20 à 100 °C au point de fusion du composé organique dérivé de silazane, de façon à former une couche infusible sur la surface de la fibre, et

(D) on soumet la fibre à une pyrolyse afin de former une fibre céramique creuse à intérieur vide.

**16.** Procédé selon la revendication 15, dans lequel le polymère organique de silazane est obtenu en faisant réagir un mélange de méthyldichlorosilane, de méthyltrichlorosilane et de diméthyldichlorosilane, avec de l'ammoniac pour former un produit d'ammoniolyse, et en condensant le produit d'ammoniolyse en présence d'un catalyseur basique capable d'effectuer une déprotonation.

**17.** Procédé selon la revendication 16, dans lequel le mélange contient du méthyldichlorosilane, du méthyltrichlorosilane et du diméthyldichlorosilane selon les proportions de 55 à 80:10 à 30:5 à 25 en moles %.

**18.** Procédé selon la revendication 15, dans lequel le polymère organique de silazane est obtenu en faisant réagir un mélange (i) d'au moins un composant choisi parmi les composés organiques du silicium de formule générale (I) :

(I) 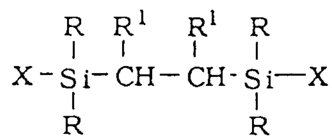

dans laquelle R est un groupe choisi parmi un atome d'hydrogène, de chlore, de brome, un groupe méthyle, éthyle, phényle et un groupe vinyle, $R^1$ représente un atome d'hydrogène ou un groupe méthyle, X représente un atome de chlore ou de brome, et les composés organiques du silicium de formule générale (II) :

(II) 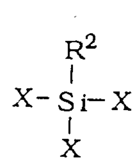

dans laquelle $R^2$ représente un groupe choisi parmi un atome d'hydrogène, les groupes méthyle, éthyle, phényle et vinyle, et X est tel que défini ci-dessus, et (ii) d'un composé organique du silicium de formule générale (III) :

(III) 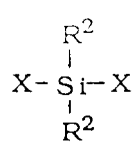

dans laquelle $R^2$ et X sont tels que définis ci-dessus, avec de l'ammoniac, et par condensation avec déprotonation du produit d'ammoniolyse résultant.

**19.** Procédé selon la revendication 18, dans lequel le mélange contient les composés correspondant aux formules (I), (II) et (III) selon des proportions de 1 à 25:1 à 25:50 à 80 moles %.

**20.** Procédé selon la revendication 15, dans lequel le polymère organique de silazane est obtenu en faisant réagir un mélange (i) d'au moins un composant choisi parmi les composés organiques du silicium de formule générale (IV) :

(IV) 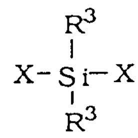

dans laquelle $R^3$ représente un groupe choisi parmi les groupes méthyle, éthyle et phényle, et X représente un atome de chlore ou de brome, et (ii) d'au moins un composant choisi parmi les composés organiques du silicium de formule générale (V) :

(V) 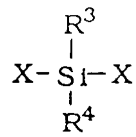

dans laquelle $R^3$ et X sont tels que définis ci-dessus, et $R^4$ représente un atome d'hydrogène ou un groupe vinyle, avec de l'ammoniac pour former un composé dérivé de silazane, et on polymérise le composé dérive de silazane en présence d'un catalyseur alcalin.

**21.** Procédé selon la revendication 20, dans lequel le mélange contient les composés de formule (IV) et (V) selon des proportions de 20:90 à 90:10 en moles %.

**22.** Procédé selon la revendication 15, dans lequel le polymère organique de silazane est obtenu par polymérisation à chaud d'hexaméthylcyclotrisilazane comportant le motif :

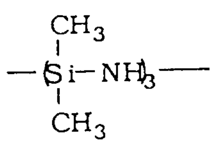

en présence de KOH.

**23.** Procédé selon la revendication 15, dans lequel le composé employé dans l'étape (B) est choisi parmi : $CH_3SiCl_3$, $(CH_3)_2SiCl_2$, $(C_2H_5)SiCl_3$, $(C_2H_5)_2SiCl_2$, $C_6H_5SiCl_3$, $(C_6H_5)_2SiCl_2$, $CH_2=CHSiCl_3$, $(CH_2=CH)_2SiCl_2$, $HSiCl_3$, $H_2SiCl_2$, $SiCl_4$, $H(CH_3)SiCl_2$, $H(CH_2=CH)SiCl_2$, $(CH_2=CH)C_6H_5SiCl_2$, $BCl_3$, $BBr_3$, $BI_3$, $PCl_3$, $PCl_5$, $PBr_3$, $PI_3$, $AlCl_3$, $TiCl_4$, $FeCl_3$, $VCl_4$, $GaCl_3$, $GeCl_4$, $ZrCl_4$, $NbCl_5$, $SnCl_4$, $SbCl_3$, $TaCl_5$, $TeCl_4$, $WCl_5$ et $BiCl_3$.

**24.** Procédé selon la revendication 15, dans lequel le composé est choisi parmi $H(CH_3)SiCl_2$, $HSiCl_3$, $BCl_3$, $PCl_3$, AlCl-3 et $TiCl_4$.

**25.** Procédé selon la revendication 15, dans lequel, dans l'étape (B), la fibre est traitée avec un gaz inerte contenant de 0,0001 à 0,1 mole/l d'au moins un composé choisi parmi les composés correspondant aux formules (1) à (4), sous forme de vapeur, à une température inférieure de 20 à 100 °C au point de fusion du polymère organique de silazane, pendant 5 à 240 minutes.

**26.** Procédé selon la revendication 15, dans lequel le gaz contenant de la vapeur d'eau employé dans l'étape (C) est de l'air ou un gaz inerte contenant de la vapeur d'eau à saturation.

**27.** Procédé selon la revendication 15, dans lequel le gaz contenant de l'ammoniac, employé dans l'étape (C), est de l'ammoniac gazeux seul, ou un gaz inerte contenant au moins 0,01 % en volume d'ammoniac gazeux.

**28.** Procédé selon la revendication 15, 26 ou 27 dans lequel l'étape (C) est effectuée à une température de 0 °C jusqu'à une température inférieure de 30 °C au point de fusion du polymère organique de silazane, pendant 30 à 360 minutes.

FIG.1

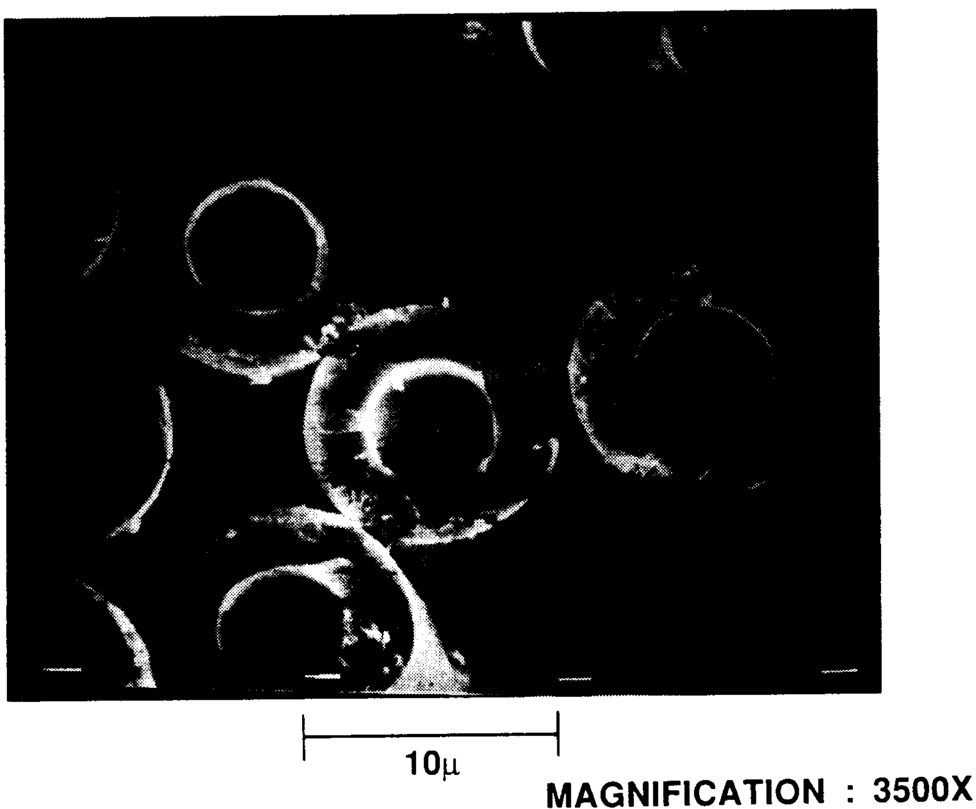


MAGNIFICATION : 3500X

FIG.2

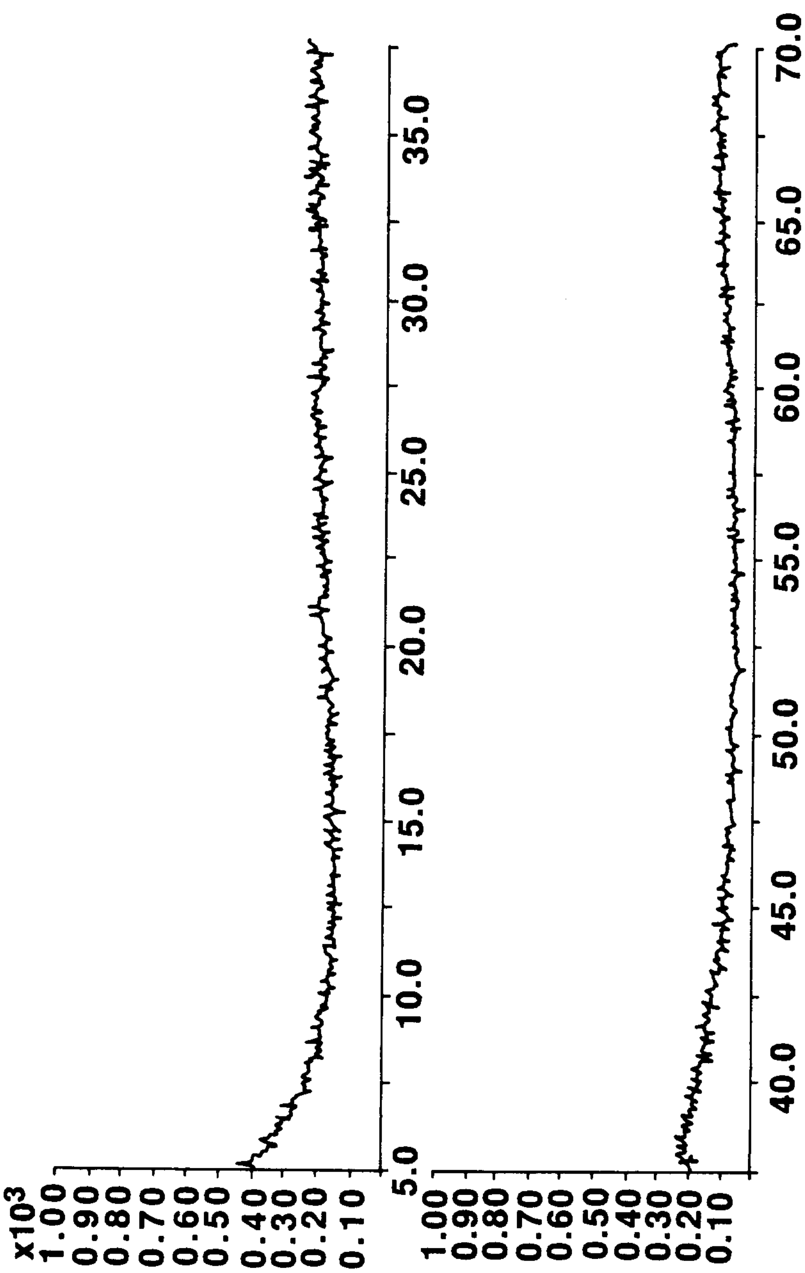
x10³
1.00
0.90
0.80
0.70
0.60
0.50
0.40
0.30
0.20
0.10
5.0
10.0
15.0
20.0
25.0
30.0
35.0
1.00
0.90
0.80
0.70
0.60
0.50
0.40
0.30
0.20
0.10
40.0
45.0
50.0
55.0
60.0
65.0
70.0

FIG. 3

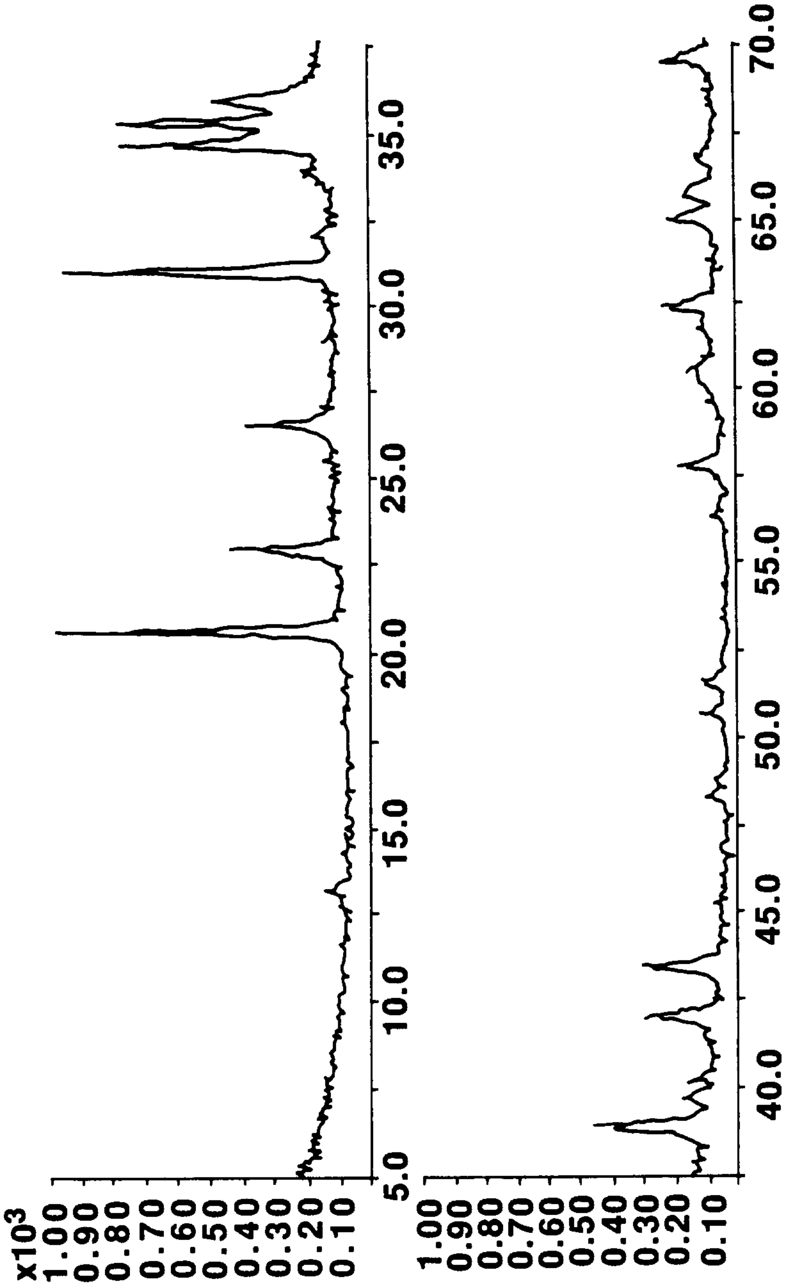
x10^3
1.00
0.90
0.80
0.70
0.60
0.50
0.40
0.30
0.20
0.10
5.0
10.0
15.0
20.0
25.0
30.0
35.0
1.00
0.90
0.80
0.70
0.60
0.50
0.40
0.30
0.20
0.10
40.0
45.0
50.0
55.0
60.0
65.0
70.0